(19) Europäisches Patentamt / European Patent Office / Office européen des brevets

(11) **EP 1 852 998 B1**

(12) **EUROPEAN PATENT SPECIFICATION**

(45) Date of publication and mention of the grant of the patent:
**25.06.2008 Bulletin 2008/26**

(51) Int Cl.:
*H04L 7/04* (2006.01)     *H04J 3/06* (2006.01)
*H04B 7/26* (2006.01)

(21) Application number: **06009070.1**

(22) Date of filing: **02.05.2006**

(54) **Apparatus and method for synchronizing a first transmit or receive device to a second transmit or receive device**

Vorrichtung und Verfahren zum Synchronisieren einer ersten Sende- oder Empfangseinrichtung mit einer zweiten Sende- oder Empfangseinrichtung

Appareil et procédé pour synchroniser un premier dispositif émetteur ou récepteur à un autre dispositif émetteur ou récepteur

(84) Designated Contracting States:
**DE GB**

(43) Date of publication of application:
**07.11.2007 Bulletin 2007/45**

(73) Proprietor: **NTT DoCoMo, Inc.**
**Tokyo 100-6150 (JP)**

(72) Inventors:
• **Auer, Gunther**
**80339 München (DE)**
• **Tyrrell, Alexander**
**85356 Freising (DE)**
• **Bettstetter, Christian**
**80687 München (DE)**

(74) Representative: **Zinkler, Franz et al**
**Patentanwälte Schoppe, Zimmermann, Stöckeler & Zinkler,**
**Postfach 246**
**82043 Pullach bei München (DE)**

(56) References cited:
**EP-A- 1 416 648          WO-A-01/99330**

• **A. TYRRELL, G. AUER, AND C. BETTSTETTER: "Firefly synchronisation in ad hoc networks" PROCEEDINGS OF 3RD MINEMA WORKSHOP, February 2006 (2006-02), XP001247382 Gent, Belgium**

• **PREHOFER C ET AL: "SELF-ORGANIZATION IN COMMUNICATION NETWORKS: PRINCIPLES AND DESIGN PARADIGMS" IEEE COMMUNICATIONS MAGAZINE, IEEE SERVICE CENTER, NEW YORK, NY, US, vol. 43, no. 7, July 2005 (2005-07), pages 78-85, XP001233793 ISSN: 0163-6804**

• **YAO-WIN HONG ET AL: "Time synchronization and reach-back communications with pulse-coupled oscillators for UWB wireless ad hoc networks" ULTRA WIDEBAND SYSTEMS AND TECHNOLOGIES, 2003 IEEE CONFERENCE ON NOV. 16-19, 2003, PISCATAWAY, NJ, USA,IEEE, 16 November 2003 (2003-11-16), pages 190-194, XP010683755 ISBN: 0-7803-8187-4**

• **ELSON J ET AL: "Fine-Grained Network Time Snchronization using Reference Broadcasts" OSDI, XX, XX, December 2002 (2002-12), pages 1-13, XP002376792**

• **YAO-WIN HONG ET AL: "Swarming activities to distribute information in large sensor networks" 2003 IEEE MILITARY COMMUNICATIONS CONFERENCE. MILCOM 2003. BOSTON, MA, OCT. 13 - 16, 2003, IEEE MILITARY COMMUNICATIONS CONFERENCE, NEW YORK, NY : IEEE, US, vol. VOL. 2 OF 2, 13 October 2003 (2003-10-13), pages 682-687, XP010698389 ISBN: 0-7803-8140-8**

EP 1 852 998 B1

**Description**

The present invention relates to the field of network synchronization and in particular to the field of self-organized network synchronization.

In recent years everyday items have gained wireless capabilities, which tends to make wireless communications with other electronic devices become more and more ubiquitous. This development lead to research in the area of ad hoc and peer-to-peer networks and to an increased interest in self-organized networks. Although these systems present relative difficulty to control, they offer surprising advantages, because they are governed by a set of simple rules and the large number of nodes somehow use these rules to produce an emerging behavior. Well designed decentralized algorithms that use these properties prove to be flexible, scalable, robust and adapt well to changes in the topology.

In nature, self-organized systems are common. A few examples include our heart cells, ants and schools of small fish. Thanks to heart pacemaker cells, a heart is able to beat periodically, and it is also able to respond quickly to abrupt demands in oxygen due to physical efforts. Ants are able to aggregate information that is gathered locally, which helps them to retrieve food efficiently. A school of small fish is able to swim as one and react to external stimulus quickly, which makes the school appear as one large fish and dissuade attacks, as described by C. Prehofer and C. Bettstetter, "Self-organization in communication networks: Principles and design paradigms," IEEE Communications Magazine, vol. 43, pp. 78-85, Jul. 2005, in the following referred to as [1].

One interesting feature of self-organized systems in nature has been observed in South-East Asia alongside riverbanks. At dawn fireflies gather on trees and synchronize their blinking, making it seem as though the whole tree is flashing in perfect synchrony. Similarly one's heart rate does not depend on a centralized scheme, but relies on heart cells synchronizing and pulsating periodically. The theoretical framework for the convergence of synchrony was published in 1990 by Mirollo and Strogatz, as described by R. Mirollo and S. Strogatz, "Synchronization of pulse-coupled biological oscillators," SIAM j. APPL. MATH, vol. 50, pp. 1645-1662, Dec. 1990, in the following referred to as [2], and will be presented later in more detail. This model assumes that fireflies form a fully meshed network and communicate through pulses.

A mathematical approach to describe such synchronizations is based on the concept of "pulse-coupled oscillators". This term refers to systems that oscillate periodically in time and interact each time they complete an oscillation. This interaction takes the form of a pulse that is perceived by neighboring oscillators. These systems are known to show different behaviors ranging from perfect synchrony to pattern formation

In the following it will be described how time synchronization is achieved between pulse-coupled oscillators. First, a mathematical model will be associated to these oscillators. Then it will be examined how two or more pulse-coupled oscillators can synchronize to pulse as one.

As a simple mathematical model or representation, a pulse-coupled oscillator is described only by its phase function ($\Phi(t)$. This function evolves linearly over time until it reaches a threshold value $\Phi_{threshold}$. When this happens, the oscillator fires, and resets its phase. Thus, if not coupled with any other oscillator, it will fire with a period equal to T, in the following this period will, therefore, be also referred to as phase function period T or oscillator period T.

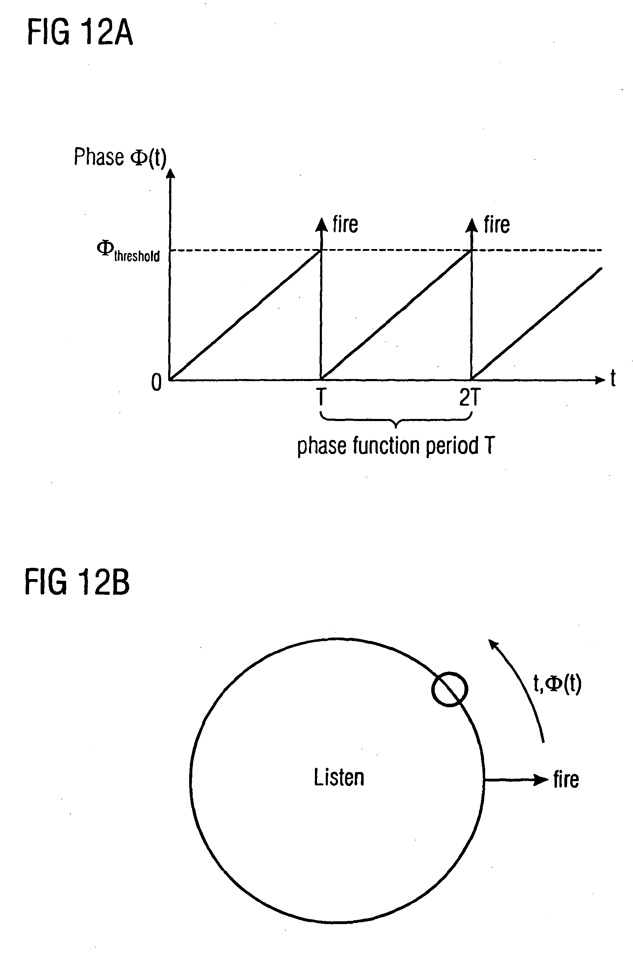

Due to the evolution of this function, these oscillators are also referred to as integrate-and-fire oscillators. Fig. 12A shows the evolution of the phase function of an isolated oscillator.

Fig. 12B shows a pie chart as a second representation of an integrate-and-fire oscillator. The oscillator can be considered as rotating counter clockwise on a circle as shown in Fig. 12B, each position on said circle representing a phase $\Phi(t)$ during a listen state and firing after completion of a circle. The phase can be also considered as an internal clock.

This model approximates the behavior of a biological pulse-coupled oscillator. The firing instant corresponds to an emission of light for a firefly, to an electrical impulse for a neuron or a transmission of a synchronization signal for a node. In the following one will see how such oscillators are able to synchronize by modifying their phase function when receiving a pulse.

Based only on a phase function, two identical oscillators are able to synchronize their firing instant within a few periods. To achieve this, an oscillator modifies its phase when receiving a pulse from another integrate-and-fire oscillator.

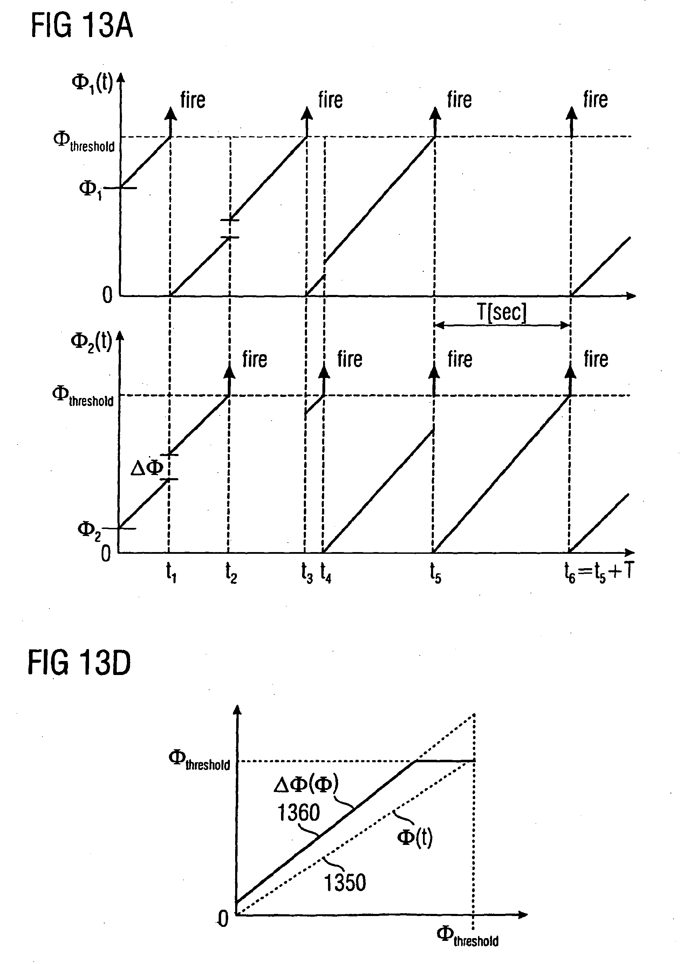

Fig. 13A shows how two oscillators can synchronize using this scheme. At instant 0, the oscillators are not synchronized. Their initial phases, $\Phi_1$ and $\Phi_2$, are randomly distributed between 0 and $\Phi_{threshold}$. At this time, each oscillator increments its phase linearly over time until one of them reaches $\Phi_{threshold}$. At $t_1$, oscillator 1 is the first to reach the threshold. It fires a pulse and resets its phase. As the oscillators are coupled, oscillator 2 will then increment its own phase. The increment is determined by the Phase Return Curve (PRC) $\Delta \Phi (\Phi)$. Comments on this function will be made later. At $t_2$, oscillator 2 fires, and oscillator 1 increases its phase accordingly. This scheme goes on until $t_5$ where the firing of oscillator 1 causes oscillator 2 to fire at the same instant. At this time, both oscillators are synchronized. At $t_6 = t_5 + T$, they fire at the same instant.

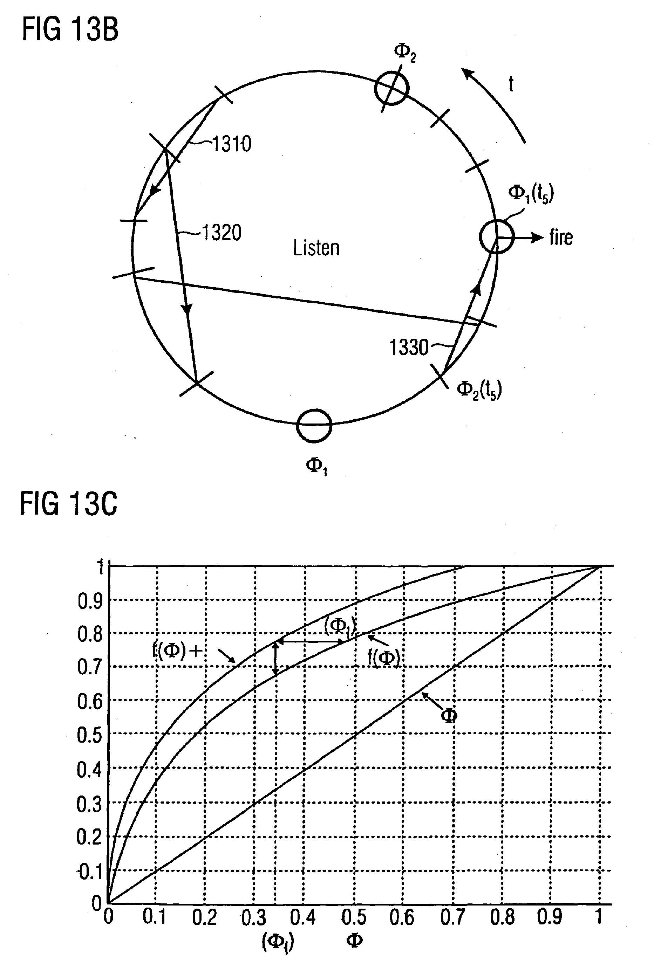

Fig. 13B shows a pie chart for a scenario with two integrate-and-fire oscillators with respective phases $\Phi_1$ and $\Phi_2$. When an oscillator fires, it immediately transmits a pulse.

Initially both oscillators are independent or isolated, their phase $\Phi$ will increment linearly over time. If coupled to each other, the firing of one oscillator will cause the other oscillator to instantly increment its phase by an amount that depends on the current phase, $\Delta \Phi (\Phi)$ being the phase increment:

$$\Phi \rightarrow \Phi + \Delta \Phi (\Phi)$$

Exemplary phase increments are depicted in Fig. 13B by the reference signs 1310, 1320 and 1330. Phase increment 1330 shows a situation as depicted in Fig. 13A at instant $t_5$, where the first oscillator fires ($\Phi_1(t_5) = \Phi_{threshold}$) and, thus, causes the second oscillator upon reception of the pulse of the first oscillator ($\Phi_2(t_5) < \Phi_{threshold}$) to increment its phase, which also equals $\Phi_{threshold}$ after performing the increment.

As shown in [2], "Synchronization of pulse-coupled biological oscillators," by Mirollo and Strogatz, this simple type of interaction leads to synchronization whatever the initial conditions are. To do so, the increment $\Delta \Phi (\Phi)$ needs to be chosen based on a function f($\Phi$), where f($\Phi$) needs to be concave down for the oscillators to synchronize. The chosen function is

$$f(\phi) = \frac{1}{b} \ln(1 + [e^b - 1]\phi) \, .$$

For each oscillator, the function f plays the role of an amplitude. When an oscillator receives a pulse, it raises its amplitude by an amount $\varepsilon$, $\varepsilon > 0$. This is equivalent to an increase in phase $\Delta(\Phi)$. Fig. 13C shows how the phase increment $\Delta \Phi (\Phi)$ is obtained from the phase response curve for b = 3 and $\varepsilon$ = 0.1 ($\Phi_{threshold}$ = 1 in this case).

Fig. 13D shows an example for the two functions describing the behavior of an integrate-and-fire oscillator, wherein reference sign 1350 refers to the integration or incrementing function for phase $\Phi(t)$, and wherein reference sign 1360 refers to a linear phase response curve $\Delta\Phi(\Phi)$. Thus, based only on this simple model, two or more identical oscillators are able to synchronize their firing instant within a few periods.

$\Delta\phi$ is determined by the Phase Response Curve (PRC), which was chosen to be linear in [2]:

$$\phi + \Delta\phi = \min(\alpha \cdot \phi + \beta, 1) \quad \text{with} \quad \begin{cases} \alpha = \exp(b \cdot \varepsilon) \\ \beta = \dfrac{\exp(b \cdot \varepsilon) - 1}{\exp(b) - 1} \end{cases} \quad (1)$$

wherein $b$ is the dissipation factor and $\varepsilon$ is the amplitude increment. Both factors determine the coupling between oscillators. The threshold $\phi_{theshold}$ is normalized to one.

It was shown in [2] that if the network is fully meshed, the system always converges, i.e. all oscillator will fire as one, for $b > 0$ and $\varepsilon > 0$. The time to synchrony is inversely proportional to the product $b \cdot \varepsilon$.

This model, as explained previously, presents the simplest mathematical interpretation of pulse-coupled oscillators that leads to synchrony.

In a wireless environment pulses are hardly considered for communication, because they are difficult to detect. This original framework was adapted to fit communications through bursts or sequences of pulses of a certain duration, as desribed by A. Tyrrell, G. Auer, and C. Bettstetter, "Firefly synchronization in ad hoc networks," in Proc. of 3rd MiNEMA workshop, Feb. 2006, in the following referred to as [3]. This scheme is referred to as the time advance synchronization scheme, and it will also be presented later in more detail.

Thus far, synchronization schemes assume nodes form a fully meshed network, which can be true in a wireless network. However, in general, this assumption does not hold for two reasons. Firstly if considering that nodes are spread over a large area or have limited transmission power, a node can only communicate with nodes that are within its transmission range, i.e. with neighboring nodes. Secondly for communication between nodes in a peer-to-peer fashion, a fully meshed network implies high interference. It is therefore preferable to lower transmission power, in order to improve the capacity of the network. Thus in most cases, the topology of a wireless network is not fully meshed.

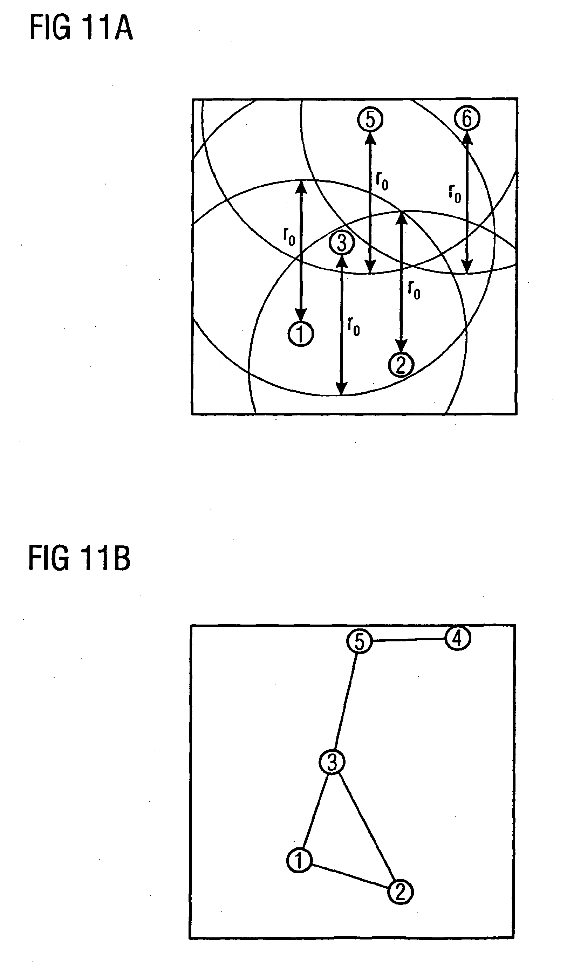

More realistically the topology of an ad hoc network needs to be considered as meshed. Two devices in the network are not necessarily within transmission range, but they can communicate by using neighboring nodes, thus forming a multihop network. If a distance-dependent channel model is considered, the transmission range is simplified as a circle with radius $r_0$. A node can only directly communicate with nodes that fall within this region. Fig. 11A represents five nodes randomly distributed over some a square area and their respective transmission ranges.

When simply representing the coordinates and reachable area of nodes, it is difficult to render the connectivity of the network. For this purpose a second representation of the same network of five nodes is shown on Fig. 11B. A line symbolizes the fact that a link between the two nodes exists and communication is possible.

The following description summarizes how time synchronization can be obtained in a distributed fashion when considering a fully meshed network. Time synchronization is defined as aligning local time units in order to define a common slot structure among all nodes.

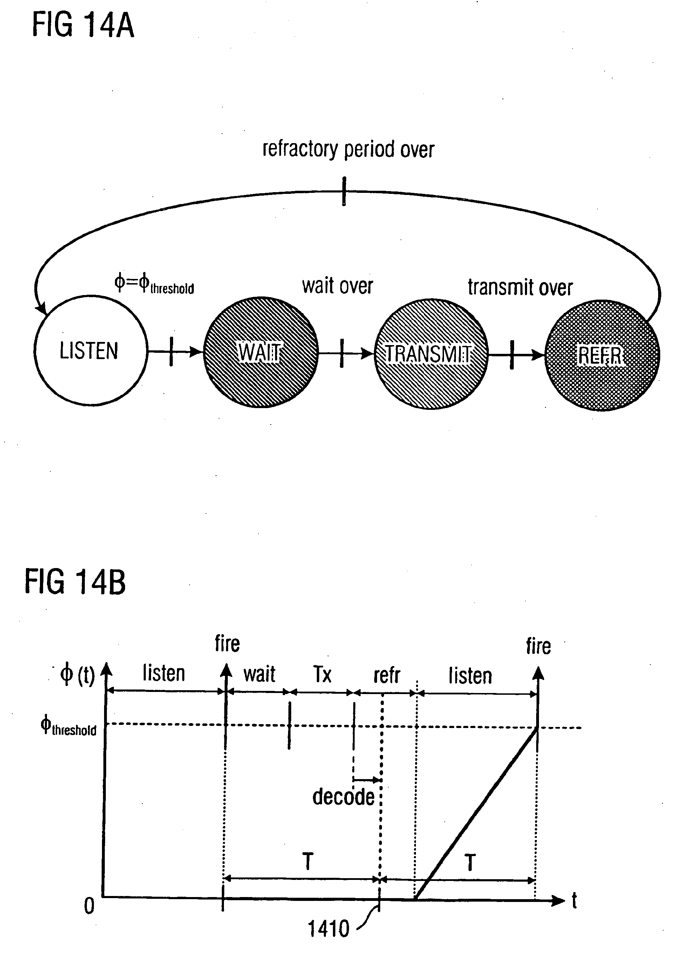

Previous work showed that transmission delays such as the duration of a synchronization word ($T_{Tx}$) and the decoding delay required by a receiver to process the received message ($T_{dec}$) affect the attainable accuracy of the original firefly synchronization scheme [3]. To combat this negative effect, a waiting state was added to the finite state machine of a node. The state machine describing one node following the time advance synchronization scheme is shown on Fig. 14A.

The state machine comprises four states LISTEN, WAIT, TRANSMIT and REFR (REFRACTORY). During a listen state LISTEN a node increments the phase $\Phi$ according to the integration function and listens for a listening-time $T_{listen}$ for pulses of other nodes. Upon reception of a pulse the node increases the phase according to the phase response curve. The node fires, or in other words reaches the firing state, as soon as phase $\Phi$ reaches the threshold value, i.e. $\Phi = \Phi_{threshold}$. At this event (fire) the node resets the phase to zero, changes to a waiting state WAIT and waits there for a waiting time $T_{wait}$ associated to the waiting state. During the waiting state the node neither listens to pulses of other nodes nor transmits itself a pulse.

When the waiting time is over (event: wait over), the node changes to a transmitting state TRANSMIT and starts itself transmitting a pulse or synchronization signal having a synchronization signal length $T_{Tx}$. After transmission of the synchronization signal (event: transmit over) the node changes into a refractory state REFR. The node remains for a refractory time $T_{refr}$ in the refractory state. After the refractory time is over (event: refractory period over) the node changes again into the listen state.

Fig. 14B shows an exemplary diagram of a phase $\Phi(t)$ over time t. The node first listens (listen) for synchronization signals of other nodes and increments its phase, after reaching the threshold value, the node fires (fire) and waits (wait) the waiting time before transmitting (Tx) the synchronization signal. After transmitting, the node changes to the refractory state (refr) and afterwards changes again into the listen state (listen). Fig. 14B shows a scenario where a propagation delay To can be neglected. The waiting time $T_{wait}$ is defined as:

$$T_{wait} = T - (T_{Tx} + T_{dec}),$$

wherein $T_{dec}$ is a decoding time.

Another node receiving the synchronization signal will start decoding the synchronization signal after having fully received the synchronization signal, the required time for decoding being said decoding time $T_{dec}$, and will increment its phase exactly T seconds after the first node has fired (1410).

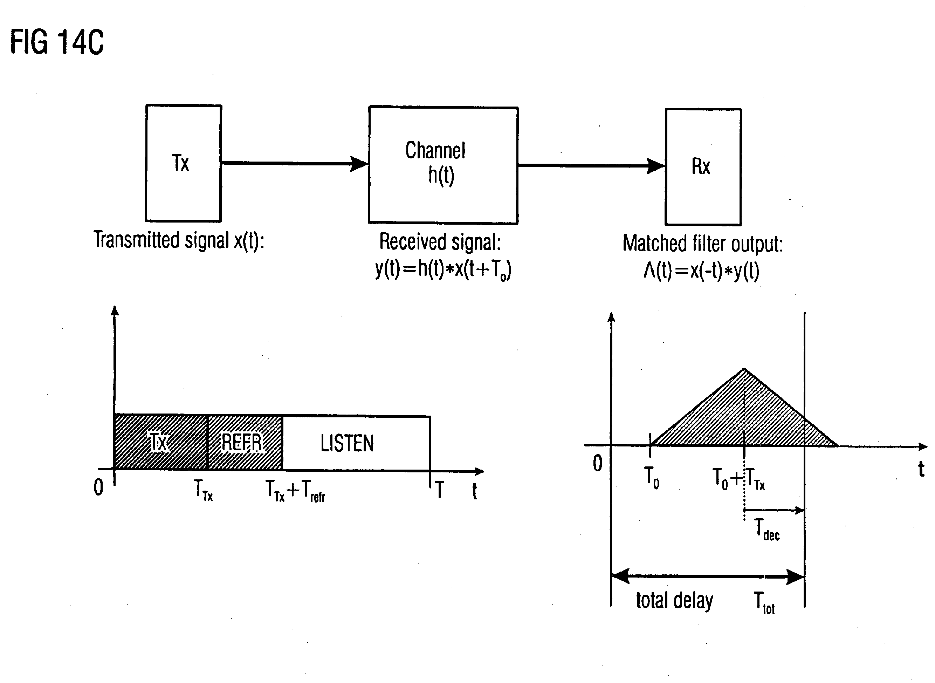

The upper part of Fig. 14C shows an exemplary transmission model with a transmitter Tx transmitting a signal x(t) over a channel with a channel function h(t) to a receiver Rx. The signal y(t) received by the receiver Rx can be written as:

$$y(t) = h(t) * x(t + T_0),$$

with $T_0$ being the propagation delay caused by the channel. The output of a matched filter applied to the received signal can be described as follows:

$$\Lambda(t) = x(-t) * y(t).$$

The lower left side of Fig. 14C shows a sequence of states over time, starting with a transmission Tx lasting a transmission time $T_{Tx}$ followed by a refractory state and a listen state. The lower right side of Fig. 14C shows the total delay $T_{tot}$ between the actual start of a transmission of a node and a respective increase of a phase of another node, taking into account propagation delay $T_0$, a synchronization signal length or transmission time $T_{Tx}$ and the decoding time $T_{dec}$. Taking into account the aforementioned delays means that the reception of the synchronization signal occurs

$$T_{tot} = T_0 + T_{Tx} + T_{dec.}$$

In simulations it has been observed that the aforementioned time advance system works well in a fully meshed environment. In meshed networks, where nodes only have a few neighbors, the synchrony rate dropped by 20 percent in favorable networks and by 60 percent in difficult network environments. In other words, the synchrony rate in meshed networks is too low to provide a reliable solution for synchronizing nodes.

It is the object of the present invention to provide an apparatus and a method for synchronizing nodes more reliably in self-organizing meshed networks.

This object is achieved by an apparatus according to claim 1, a transmit or receive device according to claim 17, a method for synchronizing a first transmit or receive device to a second transmit or receive device according to claim 18.

The present invention provides an apparatus for synchronizing a first transmit or receive device to a second transmit or receive device, comprising:

a receiver implemented to receive and detect a synchronization signal from said second transmit or receive device;

a transmitter implemented to transmit synchronization signal which after a synchronization period is in synchronism with the synchronization signal from the second transmit or receive device;

a processing unit implemented:

to increase, after a predefined non-listening time an internal signal value according to a given first function over time, to increase said signal value according to a second function upon receiving a detection signal from said receiver, and to compare said internal signal value with a threshold value when the apparatus is in a first control state associated to a receiving period, and to decide based on a period variable whether to repeat said receiving period when said internal signal value equals said threshold value, so that in case of a repetition increasing said internal signal value is performed in a repeated receiving period without transmitting said synchronization signal, and said processing unit is further implemented to start to increase said internal signal value in said repeated receiving period using a different non-listening time or without a non-listening time, or

to control said transmitter to transmit said synchronization signal in a second control state associated to said transmitting period, which is reached when said processing unit decides to change to said transmitting period when said internal signal value equals said threshold value, to wait a receiver waiting time in a third control state associated to said transmitting period, which begins after said transmitting of said synchronization signal is terminated, wherein said receiver waiting time is greater than zero and smaller than a duration of said transmitting period, to decide based on said period variable whether to repeat said transmitting mode and in case of a repetition to control said transmitter to transmit said synchronization signal in said second control state without a listening period in between.

The present invention provides also a transmit or receive device, comprising:

an apparatus for synchronizing a first transmit or receive device; and

a controller for controlling a data transmission or a data reception based on a timing of said synchronization signal.

Furthermore, the present invention provides a method for synchronizing a first transmit or receive device to a second transmit or receive device, comprising:

increasing after a predefined non-listening time an internal signal value according to a given first function over time being in a first control state associated to a receiving period;

receiving and detecting a synchronization signal;

increasing said internal signal value according to a second function upon detecting said synchronization signal being in said first control state;

comparing said internal signal value with a given threshold value being in said first control state;

deciding based on a period value whether to repeat said receiving period, when said internal signal value equals said threshold value, so that in case of a repetition increasing said internal signal value is performed in a repeated receiving period without transmitting said synchronization signal, and so that incrementing or increasing said internal signal value in said repeated receiving period is started using a different non-listening time or without a non-listening time; or

transmitting said synchronization signal in a second control state associated to said transmitting period;

waiting a receiver waiting time in a third control state associated to said transmitting period, which begins after said transmitting of said synchronization signal is terminated, wherein said receiver waiting time is greater than zero and smaller than a duration of said transmitting period;

deciding based on said period value whether to repeat said transmitting period when said receiver waiting time is over, so that in case of a repetition said transmission of said synchronization signal is performed in a repeated transmitting period without a listening period in between.

The present invention is based on the finding that neighbor nodes which almost fire at the same time do not synchronize with each other because they do not hear each other and that introducing a higher flexibility in such a manner that nodes based on a given scheme can repeat a transmitting period and/or receiving period, synchrony even in meshed networks can be regained.

In an embodiment of the present invention said apparatus for synchronizing is in a receiving mode associated to said receiving period or in a transmitting mode associated to said transmitting period, wherein said first control state are associated to said receiving period or mode, and wherein said second and third control state is associated to said transmitting mode or period. In contrast to the time advance system with a fixed sequence of control states and where a node always changes from a listen state to a wait state and thereafter to a transmitting state and always changes after transmitting into a refractory state and thereafter into a listen state, said embodiment of said apparatus for synchronizing is operative to decide at the end of a transmitting period and/or receiving period, whether it remains in the same mode, i.e. repeats the same period, or changes into the other mode, i.e. changes into the other period. Thus, so-called deaf spots of neighbor apparatus or nodes transmitting at almost the same time which prevent the synchronization between these neighboring apparatus or nodes can be avoided.

The decision whether to repeat a period or to change into the other period is based on a period variable. Embodiments of the present invention can be implemented such that said period variable has only two values, wherein each of those two values is associated with one of the two periods. In preferred embodiments of the present invention the value of the period variable is determined based on a third function, each embodiment of the apparatus being operative to determine said value of said period variable on a different third function, different to the third functions of the neighbor nodes. Thus, it can be avoided that neighbor nodes show the same sequence of transmitting and receiving periods and, thus, in a worst case remain deaf to the synchronization signals of their neighbor nodes. Embodiments of said third functions comprise pseudo-random sequences of a set of Gold sequences or random sequences. In another embodiment said apparatus is operative to change at the end of a transmitting period to a receiving period and vice versa, in other words is operative to perform an original transmitting/receiving period as it is known from the time advance strategy, and only repeats a receiving period without a transmitting period in between in case said apparatus has not increased its internal signal values during a given number of consecutive receiving periods or rather transmitting/receiving periods, i.e. has not received and decoded a synchronization signal from a neighboring node.

Other embodiments can be operative to use a mix of the aforementioned implementations, for example, first checking whether said apparatus has successfully received and decoded a synchronization signal during a given number of the aforementioned original transmitting/receiving periods, and if not, applying a pseudo-random sequence or random sequence to determine when to repeat a transmitting or receiving period. Thus, again avoiding the same behavior of neighboring nodes.

Further embodiments of the present invention comprise a fourth control state being associated to said receiving period, during which said apparatus does not increment or increase said internal signal value, to achieve a higher stability in network scenarios with considerable propagation delay.

In other embodiments of the present invention a fifth control state is associated to said transmitting period, thus, allowing to use a middle part (mid-amble) of a frame for synchronization.

Further embodiments are operative to use a predefined part of the data packet or data frame of communication protocols, e.g. designed for organizing a transmission of payload data, as synchronization signals. Thus, the invention can be used in existing physical layer implementations, for example according to wireless local area network (WLAN) standards such as 802.11, 802.16 or any other protocol using a frame with a certain duration.

Summarizing the aforementioned it can be said that the original simplicity of the integrate-and-fire oscillator is maintained. Furthermore, the synchronization between nodes is seamless as there is no need to distinguish between an acquisition or synchronization phase and a transmitting phase. Embodiments of the present invention offer a very flexible scheme as the scheme can be adapted to pre-amble, mid-amble or post-amble schemes. In other words, the part of a frame used as synchronization signal can be in the beginning, the middle or at the end of a frame. Payload data can be transmitted when an apparatus is in the third or fifth control state associated to said transmitting period, wherein the third and fifth control state can for example be implemented as waiting states before and after transmission of the synchronization signal during said transmitting period. Thus, less constraints are put on the medium access control (MAC) layer.

Preferred embodiments of the present invention are described in detail with respect to the following figures, in which:

Fig. 1A        shows an exemplary block diagram of an inventive apparatus;

Fig. 1B        shows a state machine describing the states of an embodiment of an inventive apparatus;

Fig. 1C        shows an exemplary pie chart according to the state machine shown in Fig. 1B;

Fig. 2A        shows an exemplary pie chart for a time advance system state when a node A starts transmitting;

Fig. 2B        shows an exemplary time advance system state when a receiver of a node A has successfully received and decoded a synchronization signal;

Fig. 2C        shows an exemplary pie chart for a time advance system state when a node A switches on its receiver;

Fig. 2D        shows an exemplary pie chart illustrating a decomposition of receivers and transmitters with the time advance strategy;

Fig.2E         shows a particular network typology NW1 of eight nodes that have only one or two neighbors;

Fig. 2F        shows a diagram plotting a synchrony rate over a synchronization signal length when directly applying the time advance synchronization scheme to the network NW1 according to Fig. 2E;

Fig. 2G        shows a diagram plotting a meantime to synchrony over a synchronization signal length when directly applying the time advance synchronization scheme to the network NW1 according to Fig. 2E;

Fig. 3A        shows an exemplary pie chart illustrating a

Fig. 3B        separation of states composing the time advance scheme into a transmitting period and a receiving period and the respective durations of said states; shows an exemplary modified state machine of the

Fig. 4A        time advance synchronization scheme according to an embodiment of the present invention; shows a diagram comparing a synchrony rate when

Fig. 4B        applying a generalized time advance synchronization scheme in combination with a gold sequence and when applying the original time advance synchronization scheme; shows a diagram comparing a synchrony rate

Fig. 5A        achieved using a generalized time advance synchronization scheme in combination with a gold sequence to network NW1 according to Fig. 2E in comparison to a time advance synchronization scheme; shows a diagram comparing a synchrony rate

Fig. 5B        achieved when applying the generalized time advance synchronization scheme in combination with a gold sequence in combination with a random transmission and when applying the original time advance synchronization scheme; shows a diagram comparing the meantime to synchrony over the synchronization signal length for the generalized time advance synchronization in combination with a gold sequence, in combination with a random transmission and for the original time advance synchronization scheme;

Fig. 6        shows an exemplary sequence of period variable values when detecting local synchrony;

Fig. 7A       shows a diagram comparing a synchrony rate when applying the generalized time advance synchronization scheme in combination with local synchrony detection and when applying the original time advance synchronization scheme;

Fig. 7B       shows a diagram comparing a meantime to synchrony when applying the generalized time advance synchronization scheme in combination with a random transmission, in combination with a local synchrony detection and when applying the original time advance synchronization scheme;

Fig. 8        shows a structure of an 802.11 frame and an exemplary assignment of a transmitting period and a receiving period;

Fig. 9        shows an exemplary behavior of a transmitter using the generalized time advance strategy with an 802.11 frame;

Fig. 10       shows an exemplary synchronization of three nodes for a combination of a frame structure with the generalized time advance synchronization scheme;

Fig. 11       shows two representations of a meshed network, Fig. 11A shows respective transmission ranges of nodes and Fig. 11B shows the respective links between neighboring nodes according to Fig. 11A;

Fig. 12A      shows an exemplary phase diagram of an integrate-and-fire oscillator;

Fig. 12B      shows a pie chart of an integrate-and-fire oscillator according to Fig. 12A;

Fig. 13A      shows a synchronization of two integrate-and-fire oscillators;

Fig. 13B      shows an exemplary synchronization of two integrate-and-fire oscillators based on a pie chart representation;

Fig. 13C      shows how the phase increment is obtained from the phase response curve;

Fig. 13D      shows a diagram plotting an exemplary integration function and an exemplary phase response curve;

Fig. 14A      shows a state machine of a node using the time advance strategy;

Fig. 14B      shows a diagram plotting a phase over time for a node using a state machine according to Fig. 14A;

Fig. 14C      shows an exemplary channel model with propagation delay.

Before preferred embodiments of the present invention are described in detail, the following terms and their respective relations are introduced. The inventive apparatus may also be called a pulse-coupled oscillator or integrate-and-fire oscillator. In certain embodiments the internal signal value may also be referred to as phase $\Phi$, the threshold value as $\Phi_{threshold}$, a first function as phase function, integration function or increment function, and a second function as phase response curve $\Delta\Phi(\Phi)$. In certain embodiments the first control state may also be referred to as listen state, the second control state as transmitting state, the third control state as receiver wait state, the fourth control state as refractory state and the fifth control state as transmitter waiting state. The term node may refer to an embodiment of the inventive apparatus or generally to an inventive transmit or receive device. The transmitting period may also be referred to as transmitting time slot and accordingly a receiving period also as a receiving time slot. The synchronization signal may also be referred to as pulse, message or synchronization burst.

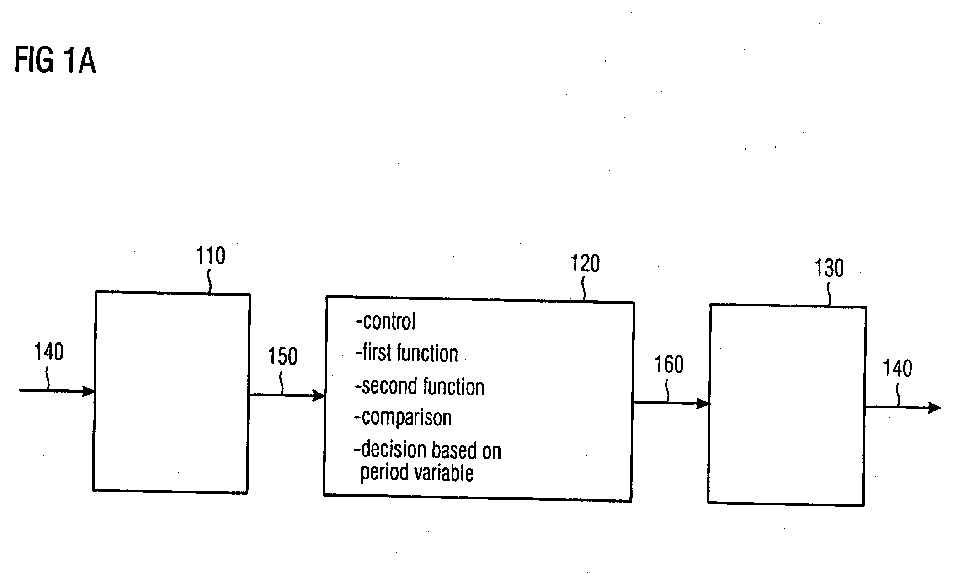

Fig. 1A shows an exemplary embodiment of an inventive apparatus comprising a receiver 110, a processing unit 120 and a transmitter 130. The first control state is associated to a receiving period or receiving mode, and the second and third control state are associated to a transmitting period or transmit mode. The apparatus is operative to either transmit or receive but not to transmit and receive synchronization signals at the same time. Accordingly, the apparatus may be either in a transmitting mode or a receiving mode. The processing unit 120 is implemented to control the receiver 110 and the transmitter 130, for example, to change from one control state to another control state. The processing unit 120 increases an internal signal value or a phase, according to a first function or phase function, being in a first control state. Being in a first control state the receiver 110 is ready to receive a synchronization signal 140 from another apparatus or node, to decode the synchronization signal 140 after successful reception and detection, also referred to as decoding of the synchronization signal 140, and to send a detection signal 150 to the processing unit 120. A detection of a synchronization signal can be performed for example by a matched filter or correlation detector with the correlation peak being for example the detection signal 150. Processing unit 120 is also implemented to modify the internal signal value according to the second function, for example a phase response curve or coupling function, upon reception of the detection signal 150 being in a first control state. The processing unit is further implemented to compare the internal signal value with a given threshold value, for example $\Phi_{threshold}$, and as soon as the internal signal value equals the threshold value to terminate the first control state. At this point of time the processing unit decides based on a period variable, whether to repeat a listening period or to change to a transmitting period.

As soon as the internal signal value equals the threshold value, i.e. fires, said processing unit 120 resets its internal signal value and decides whether to change into said transmitting period or to repeat said receiving period.

In case said processing unit 120 decides to repeat a receiving period it starts again incrementing the internal signal value. It can be further implemented to continue receiving a synchronization signal which it already started receiving during a preceding receiving period and decode that synchronization signal or start decoding a synchronization signal completely received during a preceding receiving period or continue an ongoing decoding started in a preceding receiving period. In other embodiments the processing unit can be operative to discard receiving or decoding synchronization signals it started to receive or decode in a preceding receiving period. As soon as the internal signal value again reaches the threshold value, the processing unit decides again whether to repeat the receiving period or to change to the transmitting period.

In case the processing unit 120 decides to change to the transmitting period, the processing unit 120 can be operative to discard any receiving or decoding started during the preceding receiving period. In alternative embodiments processing unit 120 can be operative to start decoding a synchronization signal completely received during the preceding receiving period or continue an ongoing decoding started during the preceding receiving period. In the latter case, the processing unit 120 can be operative to not increase the internal signal value during the transmitting period but will delay the increase until reaching, for example, the first or listen state again. When changing to the transmission period the processing unit 120 is operative to send a generation signal 160 to the transmitter 130 and the transmitter will transmit a synchronization signal 140 immediately upon reception of the generation signal 160. At the same time the processing unit 120 is operative to control the receiver 110 such that it stops receiving or listening to synchronization signals 140 from neighbor nodes.

After the transmitter 130 has transmitted the synchronization signal 140 the processing unit is operative to change itself and the transmitter into the third control state and wait for a receiver waiting time in that state. After the receiver waiting time is over the processing unit 120 is operative to decide based on the period variable, whether to repeat the transmitting period or to change to a listening period. In case it decides to repeat the transmitting period the processing unit is operative to send again a generation signal 160 to the transmitter 130, which will again transmit a synchronization signal 140. In case the processing unit 120 decides to change to the receiving period, the processing unit 120 is operative to change the receiver 110 into a first control state again and to start incrementing the internal signal value according to a first function and/or to increase the internal signal value according to a second function.

Fig. 1A shows one possible embodiment of the inventive apparatus, the apparatus can of course be implemented in a way, that for example, the receiver 110, the processing unit 120 and the transmitter 130 are integrated into one single unit, or that said decoding or detection of a synchronization signal is performed by the processing unit 120 and the receiver 110 is used for receiving payload data and synchronization signals, for example in one frame, and the processing unit is operative to listen for said synchronization signal within the frame and use it for synchronizing the transmit or receive device or node with its neighbor devices or nodes.

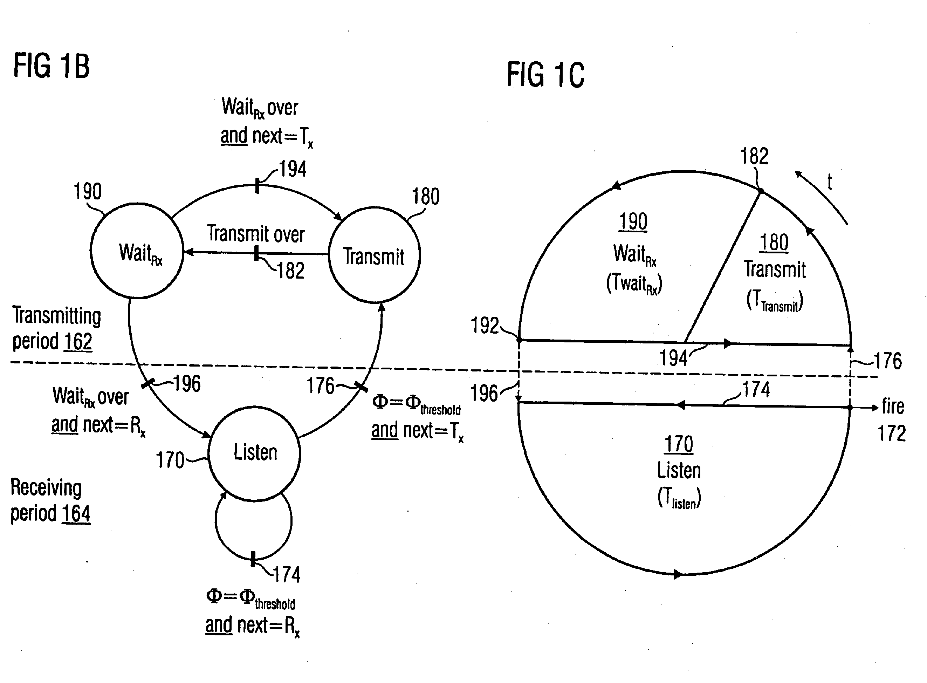

Fig. 1B shows an exemplary state machine describing a behavior of an apparatus for synchronizing based on the present invention, also referred to as generalized time advance scheduling. A state machine comprises the first control state 170 or listen state LISTEN, the second control state 180 or transmit state TRANSMIT and the third control state 190 or receiver wait state $WAIT_{Rx}$. Being in a first control state 170 the processing unit increments the internal signal value or phase $\Phi$ and increases the internal signal value in case the receiver received and detected a synchronization signal from another node. Fig. 1C shows an exemplary pie chart corresponding to the state machine according to Fig. 1B.

Fig. 1C shows the first control state or listen state in a pie chart together with the listen time $T_{listen}$ associated to the listen state. The listen time $T_{listen}$ describes the time needed until the internal signal value reaches the threshold value without any increase due to detected synchronization signals. Therefore, latest after the listen time $T_{listen}$ the apparatus fires 172. In case the period variable, in the following also referred to as "next", equals a first value Rx associated to the receiving period 162 , i.e. next = Rx and $\Phi = \Phi_{threshold}$ (174), the processing unit decides to repeat a receiving period, or in other words to re-enter the first control state 170.

In case the period variable next equals a second value Tx associated to a transmitting period 162, i.e. $\Phi = \Phi_{threshold}$ and next = Tx (176), the processing unit decides to change to the transmitting period. Both possibilities 174 and 176 are also shown in Fig. 1C.

Having changed to the second state 180 associated to the transmitting period 162 the transmitter starts transmitting the synchronization signal, the synchronization signal having a synchronization signal length of $T_{transmit}$. After the transmission of the synchronization signal is over, i.e. $T_{transmit}$ is over 182 (transmit over), the apparatus changes into the receiver wait state 190 and remains there for a receiver waiting time $WAIT_{Rx}$ associated to said receiver wait state or third control state 190. When the receiver waiting time $T_{waitRx}$ is over 192 ($WAIT_{Rx}$ over) the processing unit decides whether to remain in the transmitting period 162 or to change to the receiving period 164. In case the period variable next equals the second value Tx, i.e. $WAIT_{Rx}$ over and next = Tx (194), the apparatus changes from the third control state 192 to a second control state 180, and, thus remains in the transmitting period 162.

In case the period variable next equals the first value, i.e. $WAIT_{Rx}$ over and next = Rx (196), the apparatus changes from the third control state 190 to the first control state 170, i.e. into the receiving period 164.

The events and/or decisions 182, 192, 194 and 196 are also shown in Fig. 1C. Fig. 1C shows also the times $T_{listen}$, $T_{transmit}$ and $T_{waitRx}$ associated to the respective listen state 170, transmit state 180 and receiver wait state 190.

In a preferred embodiment in a synchronized state a duration of a receiving period 164 is equal to a duration of the transmitting period 162. In this case both periods have a duration of T and it follows:

$$T_{listen} = T,$$

and

$$T_{transmit} + T_{waitRx} = T.$$

$T_{transmit}$ is in the following also referred to as $T_{Tx}$.

Alternatively, embodiments of the apparatus can be implemented such that a duration of the receiving period or a duration of the transmitting period is an integer multiple of the period T. In this case, more than two instantaneous groups can form, each instantaneous group being spaced by T or integer multiples of T from the other groups:

In the aforementioned embodiment the period variable has only two values Tx and Rx, in alternative embodiments, the period variable may have any value and a decision of the processing unit can, for example, be based on a threshold, wherein all values above the threshold or associated to a receiving period and all values below are associated with a transmitting period.

Furthermore, embodiments of the apparatus can be operative to receive the period variable, for example, from external sources or nodes, or determine a value of the period variable based on internal or external events or, for example, a third function. A more detailed discussion of preferred embodiments for determining a period variable will be described later.

In the following problems observed using the original time advance strategy in meshed networks will be discussed and several embodiments of the present invention will be explained.

Referring to nodes according to a time advance scheduling as shown in Fig. 14A, to visualize the duration of each state a system of N nodes can be represented as markers circling around a pie chart. The natural oscillatory period for one oscillator according to the time advance schedule is equal to 2·T.

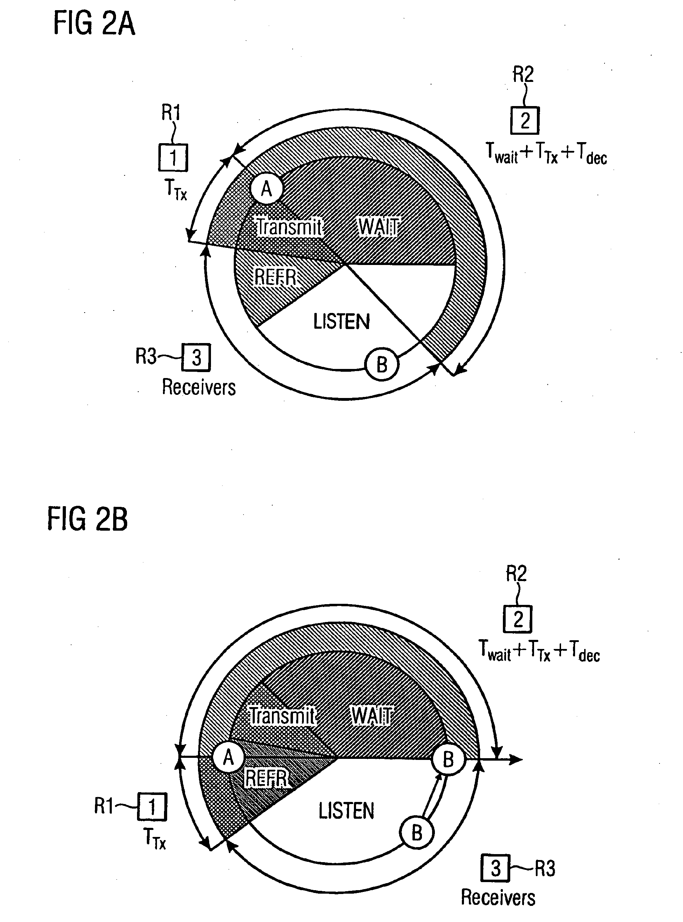

Therefore one full rotation around this pie chart is equal to 2·T. The size of each state is proportional to $T_{wait}$, $T_{Tx}$, $T_{refr}$ and $T_{Rx}$. Such a representation is shown on Figs. 2A and 2B with $T_{Rx}$ = 0.8·T, $T_{wait}$ = 0.75·T, $T_{Tx}$ = 0.2·T and $T_{refr}$ = 0.25·T, wherein $T_{wait}$ is a waiting time associated to the wait state, $T_{Tx}$ is a synchronization signal length or transmission time associated to the transmit state, wherein $T_{Rx}$ is a listen time associated to the listen state and wherein $T_{refr}$ is a refractory time associated to a refractory state.

During LISTEN, if a message is received and decoded, a phase function, which increments linearly over time from 0 to a threshold value $\Phi_{threshold}$, will be incremented by an offset which depends on the current phase value [3].

To understand how such a system of N nodes that is initially unsynchronized is able to form two groups firing exactly T seconds apart after some time, the evolution of one node A, will be studied. As a node is alternatively transmitter and receiver, node A will first be studied when it is transmitting and then when it is receiving.

Fig. 2A represents a system based on the time advance system when node A starts transmitting after leaving the wait state. Fig. 2A shows the four control states WAIT, TRANSMIT, REFR and LISTEN according to Fig. 14 A.

At this instant all nodes that are transmitting have their receiver switched off and will not be able to receive the beginning of the message of node A. This group is labeled R1. Nodes who are listening but who will fire within $T_{Tx}$ + $T_{dec}$ and nodes who are waiting will also not be able to fully receive and decode the synchronization message of node A. This region is labeled R2.

Hence only the nodes in the region labeled R3 will be able to fully interpret the synchronization message that is transmitted. They will have received and decoded the message $T_{Tx}+T_{dec}$ after node A started transmitting. This instant is represented on Fig. 2B. Node B is part of R3, and at this instant, it will increment its phase by $\Delta\Phi(\Phi_B)$, which causes it to fire immediately. Its marker will then be diametrically opposed to the marker of node A. The two nodes will therefore fire exactly *T* seconds apart from one another, in other words, these two nodes are synchronized.

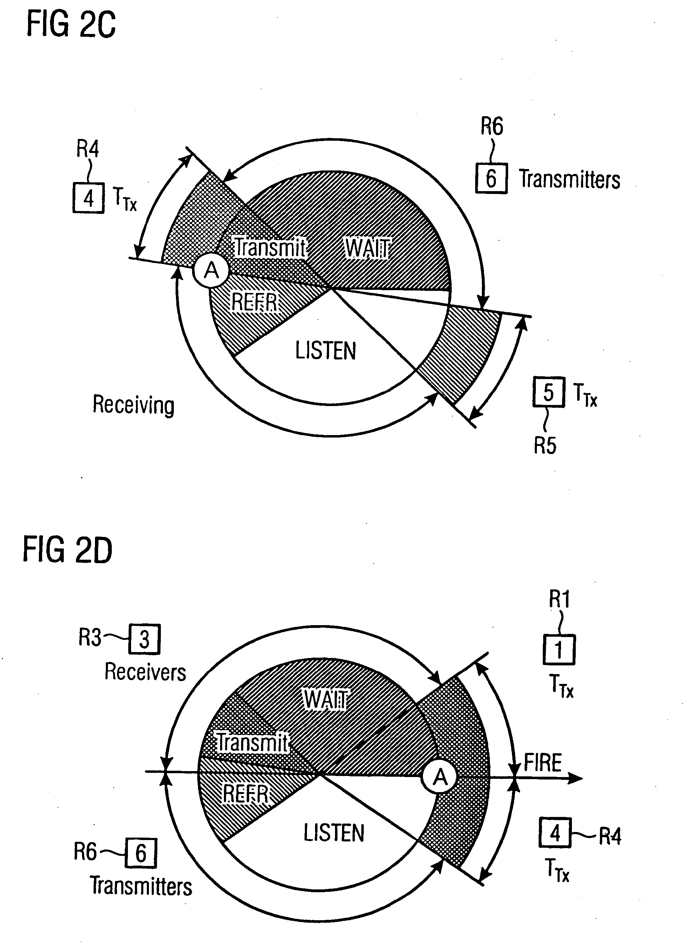

Fig. 2C represents the system when node A switches on its receiver. As node A starts receiving, it will have missed the messages that were being transmitted while it was transmitting and in a refractory state. Therefore node A will be deaf to messages of nodes whose state is within region R4.

Node A will be able to receive any message that is being transmitted as it is listening states, or in other embodiments as it is in refractory or listening states.

However if a message starts being transmitted $T_{Tx}+T_{dec}$ or less before it fires, then it will not be fully received and decoded. This region is labeled R5.

Hence node A will be able to fully receive and decode synchronization messages from transmitters whose states are in region R6. When node A receives a message from a transmitter in region R6, it will progressively shift its state towards the diametrically opposed state.

To summarize the evolution of states for node A, important regions are gathered on Fig. 2D as node A is firing.

Fig. 2D shows based on a pie chart the decomposition of receivers and transmitters with the time advance strategy.

The nodes in region R3 will be able to hear messages of node A and will progressively shift their state towards the diametrically opposed point to node A. Inversely the messages of nodes in region R6 will be heard by node A and will progressively shift to the diametrically opposed state to node A. Synchronization with the Time Advance scheme is declared when 2 groups diametrically opposed on the pie chart representation form and their firing instants are spaced T seconds apart.

When a system is synchronized, all nodes are in a stable equilibrium state, because if a node from one group moves slightly from its synchronized state, the diametrically opposed group will either join the new state or force the offset node to go back to the equilibrium position.

On the other hand, node A is not able to receive nor influence nodes whose states are within regions R1 or R4. In order for these nodes to synchronize, an external node from region R3 or R6 forces them to synchronize by merging into one group when they receive its message. A system where all nodes are within regions R1 or R4 will never be able to successfully synchronize.

In other words, they are deaf to each others synchronization signals. Therefore, regions R1 and R4 are also referred to as deafness region or deaf spots.

The probability $p_{deaf}$ for a system of N nodes to have initial conditions that are within this deafness region of width $2 \cdot T_{Tx}$ is equal to:

$$p_{deaf} \propto \left(\frac{T_{Tx}}{T}\right)^{N-1} \qquad (1)$$

The probability of synchrony $p_{sync}$ can be directly derived from the deafness probability when considering that the only effect affecting the synchrony rate is deafness. Hence the synchrony rate can be derived as:

$$p_{sync}=1-p_{deaf} \qquad (2)$$

To verify the deafness effect in meshed networks, it is simpler to study the time advance synchronization scheme with a worst case topology. As it can be seen in Equation (1), the deafness probability decreases exponentially as the number of neighboring nodes of a given node increases. Therefore the deafness problem will be most present when a node only has one or two neighbors.

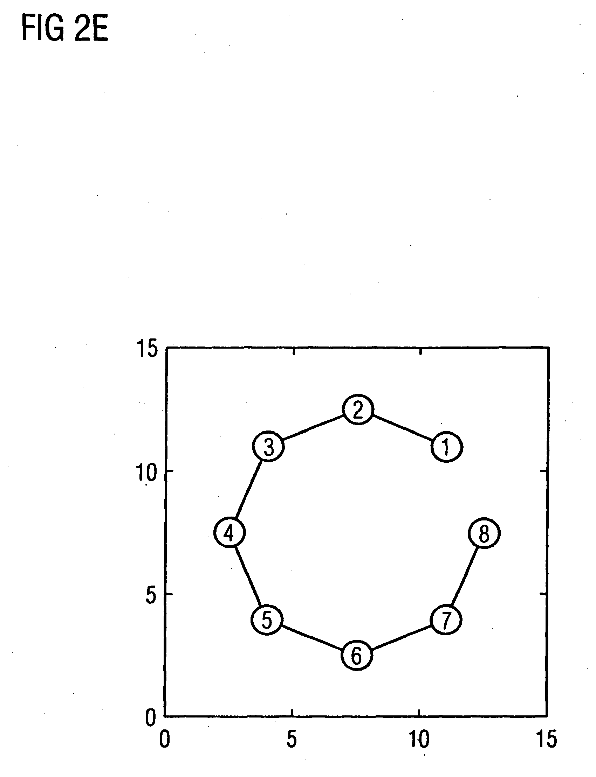

Fig. 2E shows the corresponding topology for a system of N = 8 nodes that have only one or two neighbors. This topology is in the following referred to as NW1.

Based on Equation (1), the probability for a line network of N = 4 nodes can be approximated as the sum of the probability for the end nodes to be deaf with their unique neighbor and the probability for the central nodes to be deaf:

$$p_{deaf} = \left( \left( \frac{T_{Tx}}{T} \right)^2 + 2 \cdot \left( 1 - \frac{T_{Tx}}{T} \right) \cdot \left( \frac{T_{Tx}}{T} \right) \right) \cdot \left( 1 - \left( \frac{T_{Tx}}{T} \right)^2 \right) + \left( \frac{T_{Tx}}{T} \right)^2 \qquad (3)$$

The expression for 8 nodes is rather difficult to develop, and Equation (3) serves as an approximation. To verify the validity of this equation, the Time Advance scheme is applied to NW1 as $T_{Tx}$ varies from 0.1·T to 0.5·T. The simulation settings are as follows. The delays are fixed to $T_{dec}$= 0.1·T and $T_{refr}$=$T_{Tx}$+$T_{dec}$. Each simulation runs for 80·T and if synchrony is not reached at the end of this period, synchrony is declared unsuccessful. Each period T is decomposed into 1500 steps, and state and interactions of each node at each step are calculated. The coupling settings are set to b = 3 and ε = 0.2. The initial conditions correspond to the case where all nodes have randomly distributed state variable (randomly distributed markers around the pie chart), and follow the state machine of Fig. 14A.

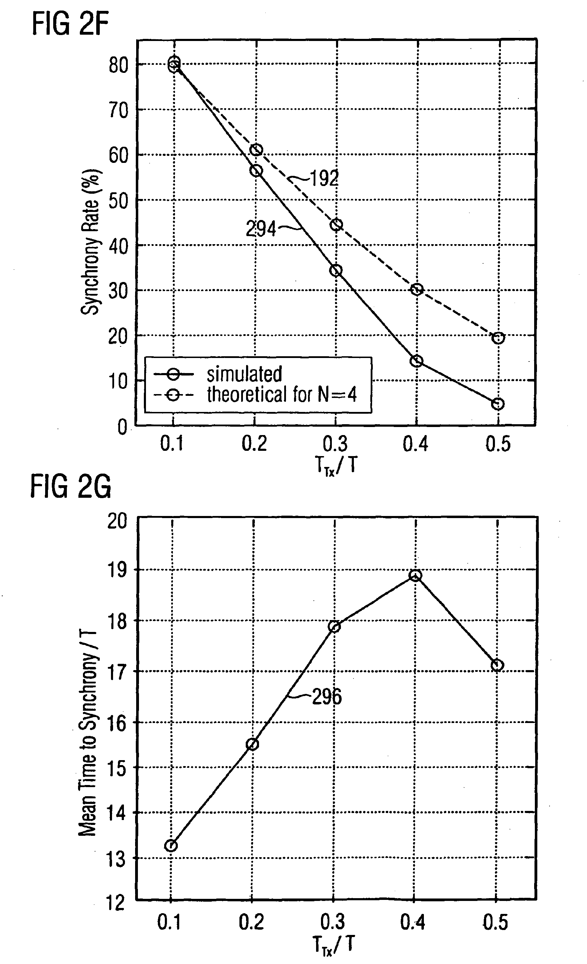

Figs. 2F and 2G plot the synchronization results based on 1000 sets of initial conditions for each $T_{Tx}$ when applying the original time advance scheme to network NW1. Fig. 2F shows the synchrony rate in % over the synchronization signal length $T_{Tx}$ normalized by the period T. Plot 292 plots the theoretical synchrony rate and plot 294 the simulated synchrony rate. Fig. 2G plots the meantime to synchrony normalized by period T over the synchronization signal length $T_{Tx}$ normalized by period T.

The degradation of the synchrony rate as the transmission delay increases confirms Equation (3). The main reason for low synchrony originates from the deafness of nodes 1 and 8. These nodes only have one neighbor, which implies that the probability for them to be initially in the deafness area of nodes 2 and 7 is equal to $\dfrac{T_{Tx}}{T}$

Clearly a synchrony rate lower 15% when the transmission duration is higher than 0.4·T is not acceptable, and the original Time Advance synchronization scheme needs to be modified.

Combating the deafness effect is necessary as it is the main cause that prevents synchronization when the transmission delay is significant. This is particularly visible in meshed networks as was shown. In order to regain synchrony, the behavior of a node following the time advance synchronization scheme is decomposed according to the invention into two distinct time slots or periods. This approach is in the following also referred to as generalized time advanced synchronization scheme. This scheme will give more flexibility to the original scheme, and will be used to recover high synchrony rates.

From the description of the time advance synchronization scheme described earlier, the deafness among nodes is inherently linked to the initial conditions. This cannot be changed.

Another factor that favors this deafness is that nodes synchronize with improved accuracy thanks to the formation of two groups. Each group needs the other group to synchronize, and one group cannot hear nodes that are within its own group. Therefore if a node is within the deaf region of its neighbors, synchrony cannot be reached.

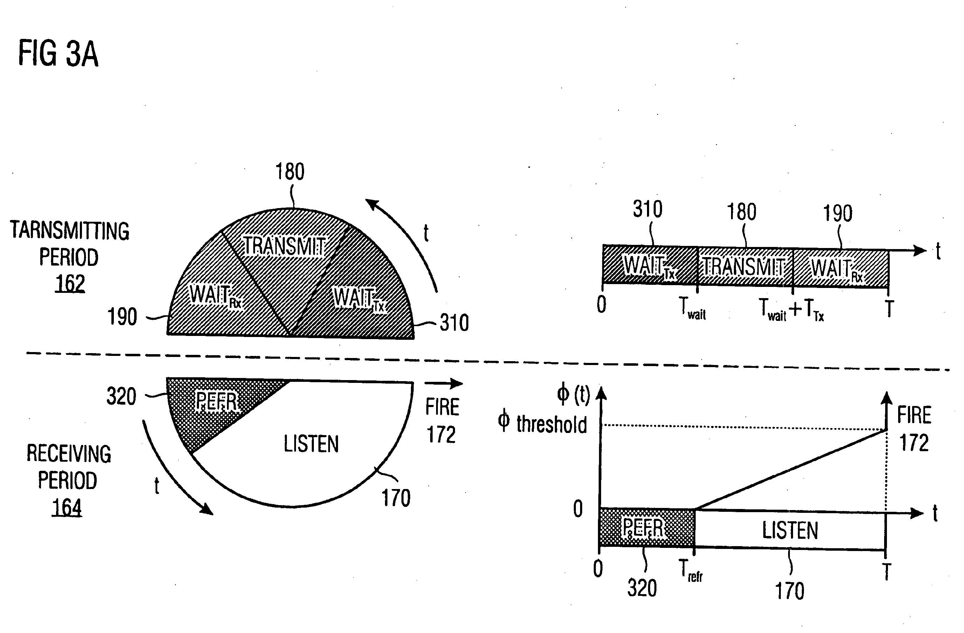

To solve the situation where two nodes cannot hear one another, the full period of a node of duration 2T is decomposed into two periods of duration T: a transmitting period and a receiving period as already introduced earlier. This decomposition is shown on Fig. 3A.

Fig. 3A shows on the left hand side a decomposed pie chart with the transmitting period 162 and the receiving period 164. The transmitting period 162 comprises three states: a transmitter waiting state 310 (WAIT$_{Tx}$) which corresponds to the wait state WAIT as known from the time advance schedule depicted in Fig. 14A, a transmit state 180 (TRANSMIT) for transmitting the synchronization signal and a receiver wait state 190 (WAIT$_{Rx}$). The receiving period 164 comprises a refractory state 320 (REFR) and a listen state 170 (LISTEN).

The listen state or first state 170, the transmit state or second control state 180 and the receiver wait state or third control state 190 correspond to the respective control states as shown in Fig. 1B. In the following the refractory state 320 will also be referred to as fourth control state and the transmitter wait state 310 will also be referred to as fifth control state.

Fig. 3A shows on the right hand side the five control states as shown on the left hand side and their associated durations and tasks. $T_{wait}$ is the time associated to the transmitter waiting state WAIT$_{Tx}$ 310, $T_{Tx}$ is the time associated to the transmit state TRANSMIT 180, $T_{refr}$ is the time associated to the refractory state REFR 320 and $T_{listen}$ is the time associated to the listen state LISTEN 170.

To clarify the aforementioned decomposition, an additional state labeled WAIT$_{Rx}$ is added. Its duration is equal to $T_{dec}$, which allows for the receiver to decode a synchronization message. As the decoding delay was initially defined as the time required by the receiver to process a received message, $T_{dec}$ cannot be set to zero. The waiting state is renamed WAIT$_{Tx}$ and a transmitter will stay in this state during $T_{wait}$. Therefore a transmitting period of a node is composed of three states, WAIT$_{Rx}$, TRANSMIT and WAIT$_{Tx}$, and the duration of this period is equal to T:

$$T_{wait} + T_{Tx} + T_{dec} = T \qquad\qquad (4)$$

Data can be transmitted during $WAIT_{Rx}$ and $WAIT_{Tx}$. TRANSMIT now corresponds to the transmission of a synchronization word. $T_{wait}$ can be set to zero if the synchronization word is the preamble. If the synchronization sequence is in the middle of a burst, such as in the GSM standard, $T_{wait}$ and $T_{dec}$ should be equal. The time in $WAIT_{Rx}$ should not be set to zero in order to allow the receiver sufficient time to identify the synchronization message.

The receiving period has a duration of T, and is composed of two states: REFR and LISTEN, and the maximum duration, i.e. without phase increase, of the receiving period is equal to T:

$$T_{refr} + T_{listen} = T.$$

At the beginning of a Receiving Period, a node will stay in the refractory state during a time equal to $T_{refr}$. While in refractory state, a node switches on its receiver, its phase function does not increment and no phase increase is possible. This is to prevent instability due to the propagation delay, as described in Y.-W. Hong, B. Sirkeci, and A. Scaglione, "Swarming activities to distribute information in large sensor networks," in Proc. MILCOM Conference, Boston, MA, pp. 682-687, Oct. 2003, in the following referred to as [4]. During LISTEN, the phase function is adjusted when a synchronization message is received.

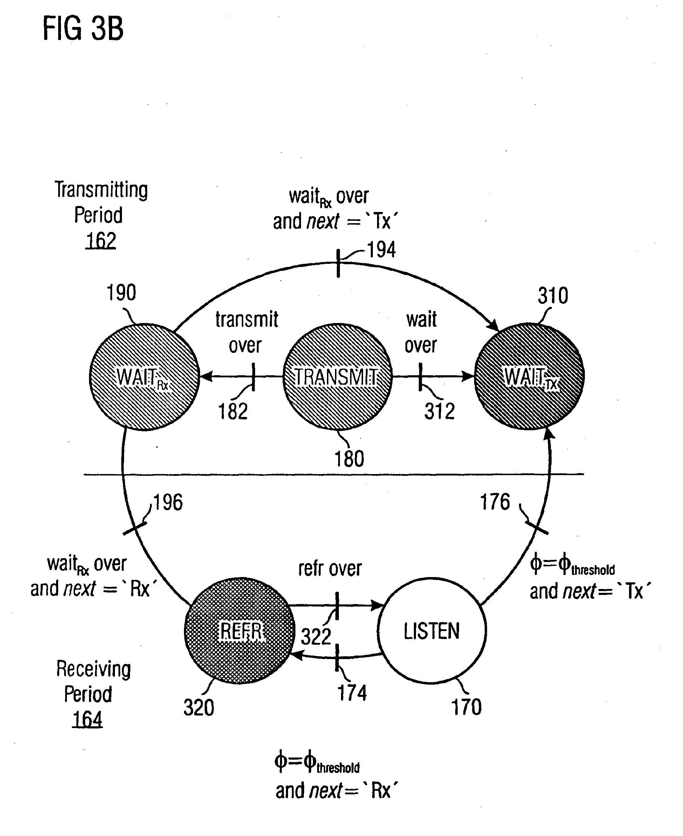

Now that the time advance scheme has been decomposed, at the end of listen and at the end of $WAIT_{Rx}$, a node will choose whether it goes into REFR or into $WAIT_{Tx}$. This choice is determined by a new variable called "next". The new state machine that summarizes these changes is represented on Fig. 3B.

Fig. 3B shows a modified state machine of the original time advance synchronization scheme, or in other words, an embodiment of a state machine of the generalized time advanced synchronization scheme corresponding to the decomposed pie chart shown in Fig. 3A. The state machine has a transmitting period 162 and a receiving period 164. The transmitting period 162 comprises the control states: transmitter wait state 310 ($WAIT_{Tx}$), the transmit state 180 (TRANSMIT) and the receiver wait state 190 ($WAIT_{Rx}$).

A node waits a transmitter waiting time $T_{waitRx}$ in said transmitter wait state 310 and changes afterwards (event: wait over) into the transmit state 180. With respect to the original time advance scheduling scheme the transmitter waiting time is also referred to as $T_{wait}$. Being in said transmit state 180 the node transmits the synchronization signal and changes afterwards 182 (event: transmit over), or in other words, after the synchronization signal length $T_{transmit}$ into the receiver wait state 190. The node waits a receiver waiting time $T_{waitRx}$ and decides then whether to repeat the transmitting period 162 or to change into the receiving period 164. With respect to the original time advance scheme the receiver waiting time is also referred to as decoding time $T_{dec}$. In case the period variable next equals Tx 194 (event: wait$_{Rx}$ over and next = Tx) the node repeats the transmitting period 162 by changing into the transmitter wait state 310, wherein the value Tx is a period variable value associated to the transmitting period. In case the period variable equals Rx (event: wait$_{Rx}$ over and next = Rx) 196, wherein Rx is a period variable value associated to the receiving period 164, the node changes into the receiving period 164 by changing into the refractory state 320.

Being in the refractory state 320 the node remains in this state for a refractory time $T_{refr}$ associated to the refractory state 320 and changes afterwards 322 (event: refr over) into the listen state 170. Being in the listen state 170 the node starts to increment its internal signal value or phase value according to a first function (phase function), refer also to the right hand side of Fig. 3A, and increases the internal signal value in case the node detected a synchronization signal from a neighbor node according to the second function (phase response curve). When the phase equals the threshold value ($\Phi = \Phi_{threshold}$), the node fires, as shown on the right hand side of Fig. 3A, and decides, whether to repeat the receiving period 164 or to change into the transmitting period 162. In case the period variable equals $R_x$ 174 ($\Phi = \Phi_{threshold}$ and next = Rx) the node repeats the receiving period 164 by changing into the refractory state 320. In case the period variable equals Tx 176 ($\Phi = \Phi_{threshold}$ and next = Tx), the node changes into the transmitting period 162 by changing into the transmitter wait state 310.

From the state machine, it is clear that the variable next is evaluated only at the end of a period, i.e. when a node exits $WAIT_{Rx}$ or when a node exits LISTEN. "next" can be determined dynamically at the end of a period, or it can be defined in a predetermined sequence, e.g. labeled RandSeq. If this sequence is equal to ['Tx', 'Rx', 'Tx', 'Rx', 'Tx', 'Rx', ... ], the scheme will be equivalent to the original time advance scheme.

A non-listening time is defined as the time during which an apparatus or node does not listen, i.e. receive and/or decode, synchronization signals of neighboring nodes. Therefore said non-listening time comprises the transmitting period but may also, in an alternative embodiment, where said apparatus is operative to not listen in a refractory state, comprises such refractory state or the associated refractory time $T_{refr}$.

In this case a non-listening time could, for example, be $T + T_{refr}$, and a different non-listening time when repeating a receiving period without a transmitting period in between, would only be $T_{refr}$.

When comparing the proposed solution with the Time Advance scheme, several advantages can be pointed out: The proposed scheme remains simple. Each node adjusts its own time reference (e.g. phase increase based on phase response curve) when listening, and transmits its reference when a packet needs to be sent (e.g. transmits a synchronization signal according to its current reference timing). The scheme is flexible, which makes its implementation very appealing. The original Time Advance scheme forced a node to alternatively transmit and receive even if no data needed to be transmitted. With the aforementioned scheme, a node does not necessarily have to follow this, which puts less constraints on the MAC layer.

In the following it will be shown that by modifying this sequence, synchrony is regained in meshed networks. Then it will be explained how the scheme can be directly applied to the IEEE 802.11 Standard.

In the following an embodiment will be described in more detail which will also be referred to as pseudo-random sequence implementation.

In order to solve the deafness problem, neighboring nodes should be able to hear one another independently of initial conditions. To do so, the sequences of next of two neighbors should ideally be orthogonal, so that when one node transmits, it is likely for the other to be listening. However orthogonal sequences are not realistic, as nodes would need to be synchronized from the start for the sequences to stay orthogonal. As a more practical application, pseudo-random sequences with good crosscorrelation properties are considered. This is the case for Gold sequences, as described by D. Sarwate and M. Pursley, "Crosscorrelation properties of pseudorandom and related sequences," Proc. IEEE, vol. 68, pp. 593-619, May 1980, in the following referred to as [5].

When using such a sequence with the generalized time advance strategy, a node A will initially randomly select a sequence $RandSeq_A$ from the set $G(u,v)$ of Gold sequences and use it to determine if its behavior in the next period will be a Receiving or a Transmitting one with the following convention:

- if $RandSeq_A(i_A)=0$, $next(i_A) = 'Rx'$

- if $RandSeq_A(i_A)=1$, $next(i_A) = 'Tx'$

where $i_A$ is a counter that is incremented at the end of each time slot (end of LISTEN or end of $WAIT_{Rx}$).

Thanks to the properties of Gold sequences and unless two nodes select the same random sequence, the case where nodes can never hear one another will be avoided.

To compare the modified synchronization scheme with the original version, the scheme is applied to network NW1 with the same conditions as in the previous section. The delays are fixed to $T_{dec}=0.1 \cdot T$ and $T_{refr}=T_{Tx}$. Each simulation runs for $150 \cdot T$ and if synchrony is not reached at the end of this period, synchrony is declared unsuccessful. Each period is decomposed into 1500 steps. The coupling settings are set to b=3 and $\varepsilon=0.2$.

The set of Gold sequences $G(u,v)$ is generated using the following settings: m=10, a=7, $t(z)=z^{-7}+z^{-3}$ and k=3. Sequences that have less than 400 '1's are discarded, and sequences were modified to avoid too many consecutive equal symbols $N_{consec}$. $N_{consec}$ is limited to 5.

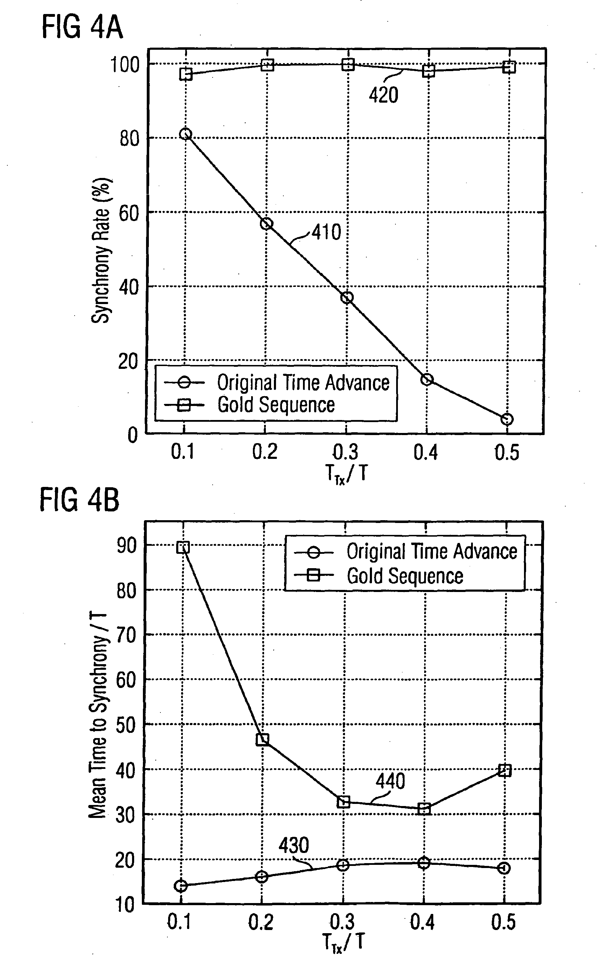

Figs. 4A and 4B plot the synchronization results for both synchronization schemes based on 1000 sets of initial conditions for each $T_{Tx}$.

Fig. 4A shows a diagram comparing the synchrony rate in % over the synchronization signal length $T_{Tx}$ normalized by the period T and plots the plot 410 for the original time advance scheme and the plot 420 for the modified or generalized time advance scheme determining the period variable "next" based on Gold sequences. Fig. 4B shows the mean time to synchrony normalized by the period T over the synchronization signal length $T_{Tx}$ normalized by the period T and plots a plot 430 for the original time advance scheme and a plot 440 for the generalized time advance scheme using Gold sequences to determine the period variable value.

Thanks to the modification in the synchronization scheme, synchrony is regained for $T_{Tx}$ varying between $0.1 \cdot T$ and $0.5 \cdot T$. The mean time to synchrony is larger with the modified version of the Time Advance, especially for low values of $T_{Tx}$.

In the following an alternative embodiment determining the period variable based on a random process, in the following also referred to as random transmission implementation, is described in more detail.

As a more straightforward application of the modified time advance scheme, the sequence RandSeq that determines next can be generated randomly by each node, and the restriction on $N_{consec}$ is also applied to this sequence.

The scheme is applied to NW1 with the same conditions as in the previous section. The delays are fixed to $T_{dec}= 0.1 \cdot T$ and $T_{refr} = 0.4 \cdot T$. Each simulation runs for $150 \cdot T$ and if synchrony is not reached at the end of this period, synchrony is declared unsuccessful. Each period is decomposed into 1500 steps. The coupling settings are set to b=3 and $\varepsilon = 0.2$.

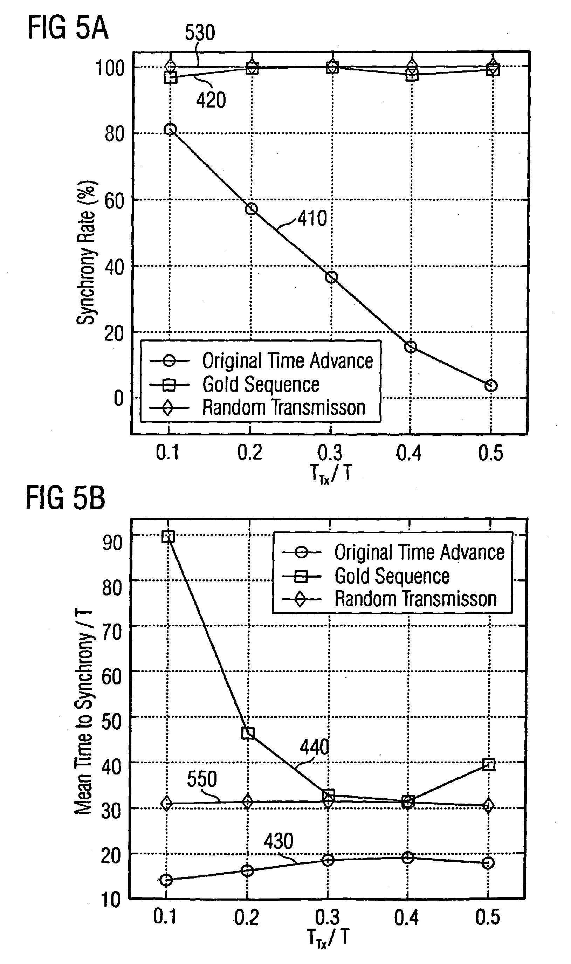

Figs. 5A and 5B plot the synchronization results for the random sequence synchronization schemes based on 1000 sets of initial conditions for each $T_{Tx}$.

Fig. 5A shows the synchrony rate in % over the synchronization signal length $T_{Tx}$ normalized by the period T and plots the plot 410 for the original time advance scheme, the plot 420 for the generalized time advance scheme using Gold sequences and the plot 530 for the generalized time advance scheme determining the period variable values based on a random generation by each node. Fig. 5B shows the mean time to synchrony normalized by the period T over the synchronization signal length $T_{TX}$ normalized by the period T and plots the plot 430 for the original time advance scheme, the plot 440 for the generalized time advance scheme using Gold sequences and the plot 550 for the generalized time advance scheme for random transmission.

The results are very encouraging as synchrony is always obtained. The time to synchrony is much lower than when Gold sequences are used. This comes from the fact that the refractory delay is fixed to $0.4 \cdot T$, whereas it was set to $T_{Tx}$ previously. It is therefore preferable to set $T_{refr}$ to a constant value.

In the following another embodiment determining the period variable based on a local synchrony, in the following also referred to as local synchrony implementation, is described in more detail.

In a meshed network, a node can directly communicate only with its neighbors, and therefore only has a local view of the entire network. In that sense, a node can only detect if it is locally synchronized. If following the original time advance synchronization scheme, it will fire every $2 \cdot T$ when it is isolated or if it has reached synchrony, because no message causes any phase adjustment.

This information can be used to determine the value of the next variable. When waiting for local synchrony, a node will, for example, follow the original time advance strategy for some time. If it fires regularly during $N_{stable}$ periods ($N_{stable} \cdot 2 \cdot T$ seconds), it can declare that it is locally synchronized. If it really is, two groups will have formed, and a node can set next to 'Rx' in order to switch group without disturbing the synchronized state.

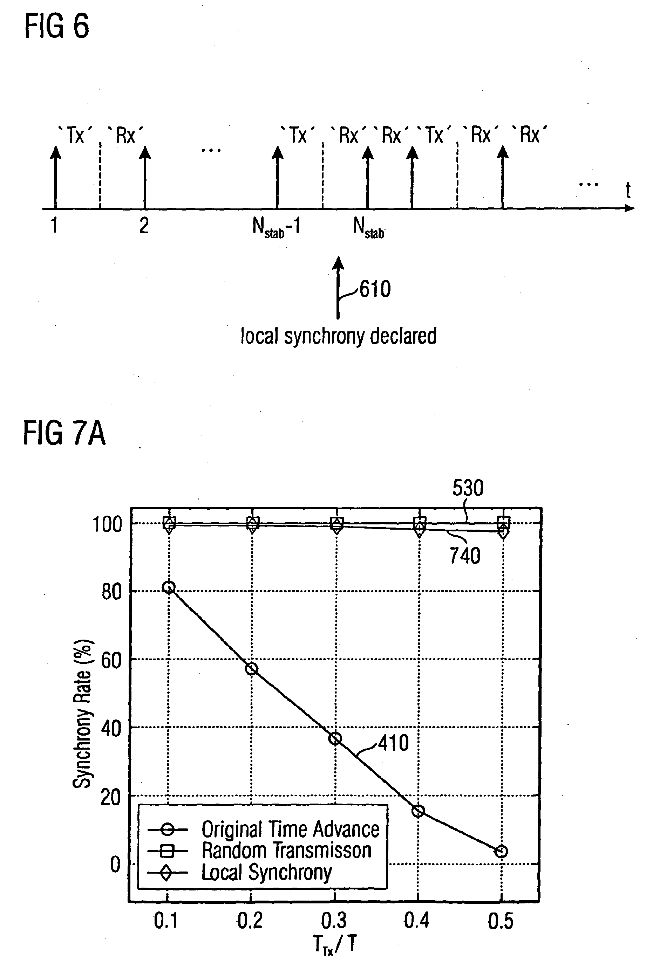

Fig. 6 plots the sequence of next when detecting local synchrony.

In the embodiment shown in Fig. 6 the node similar to the original time advance scheme changes from a receiving period to a transmitting period and vice versa until it declares local synchrony 610. Depending on the specific implementation and/or the specific period the node is in, the node can now be implemented to either repeat a receiving period, as shown in Fig. 6, or a transmitting period.

To avoid all nodes having the same behavior, some randomness can be added to the synchronization scheme. Simply, when a node detects local synchrony, it will switch group with a probability $p_{switch}$. Alternatively randomness can be added using the random backoff of the MAC layer, i.e. wait a number of slots before switching.

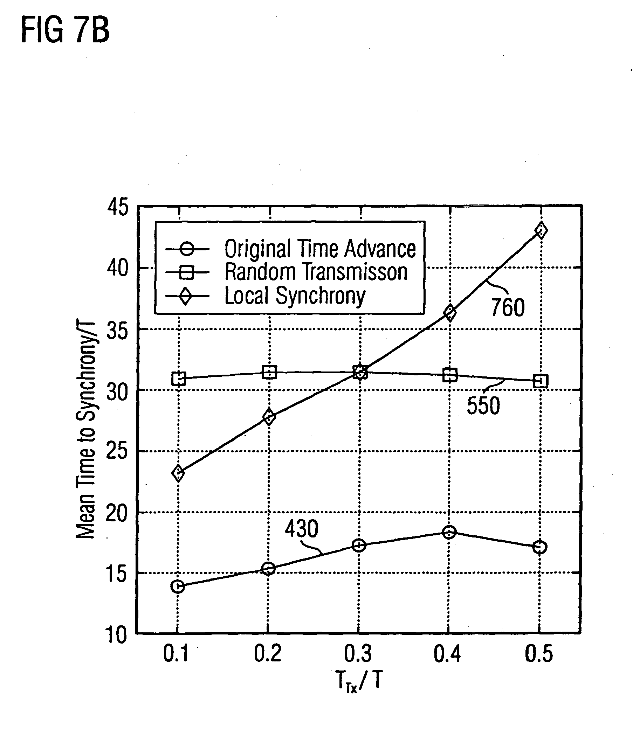

Simulation results based on 1000 initial conditions for this scheme are shown on Figs. 7A and 7B. The settings are set to $T_{dec} = 0.1 \cdot T$, $T_{refr} = T_{Tx}$, $b = 3$, $\varepsilon = 0.2$, $N_{stab} = 4$ and $p_{switch} = 0.7$.

Fig. 7A shows the synchrony rate in % over the synchronization signal length $T_{Tx}$ normalized by the period T and plots the plot 410 for the original time advance scheme, the plot 530 for the general time advance scheme with random transmission and the plot 740 for the generalized time advance scheme using the local synchrony implementation. Fig. 7B shows a diagram comparing the mean time to synchrony normalized by the period T over the synchronization signal length $T_{Tx}$ normalized by the period T and plots the plot 430 for the original time advance scheme, the plot 550 for the generalized time advance scheme using random transmission and the plot 760 for the generalized time advance scheme based on the local synchrony implementation.

For low values of $T_{Tx}$, the mean time to synchrony is much lower with the proposed scheme than with a random scheme. This is encouraging and seems to indicate that waiting for stability before switching group is more efficient than being random.

The generalized time advance synchronization scheme can be directly applied to the physical layer of the IEEE 802.11 standard. This standard does not use a time slotted MAC protocol, but uses a CSMA/CA (Carrier Sense Multiple Access/Collision Avoidance) based protocol instead. By utilizing the known frame structure of an OFDM (Orthogonal Frequency Division Multiplexing) burst used in the ERP OFDM (ERP = Extended Rate PHY) version of the 802.11 standard, the generalized time advance scheme can be directly implemented by appropriately choosing $T_{wait}$, $T_{Tx}$ and $T_{dec}$.

The 802.11 ERP OFDM frame format always contains a preamble that is used for signal detection and synchronization purposes. This preamble will be used as the synchronization word for the synchronization scheme. When receiving this word, independently of the data contained in the frame, a node will increment its phase accordingly.

From the different schemes proposed in the previous section, waiting for local synchrony seems to be the most efficient. However the random sequence scheme fits most naturally to an ad hoc network, because the arrival of packets causes the MAC protocol to randomly transmit and receive. By combining this inherent feature to the synchronization scheme, nodes would synchronize seamlessly, which enables more efficient communication.

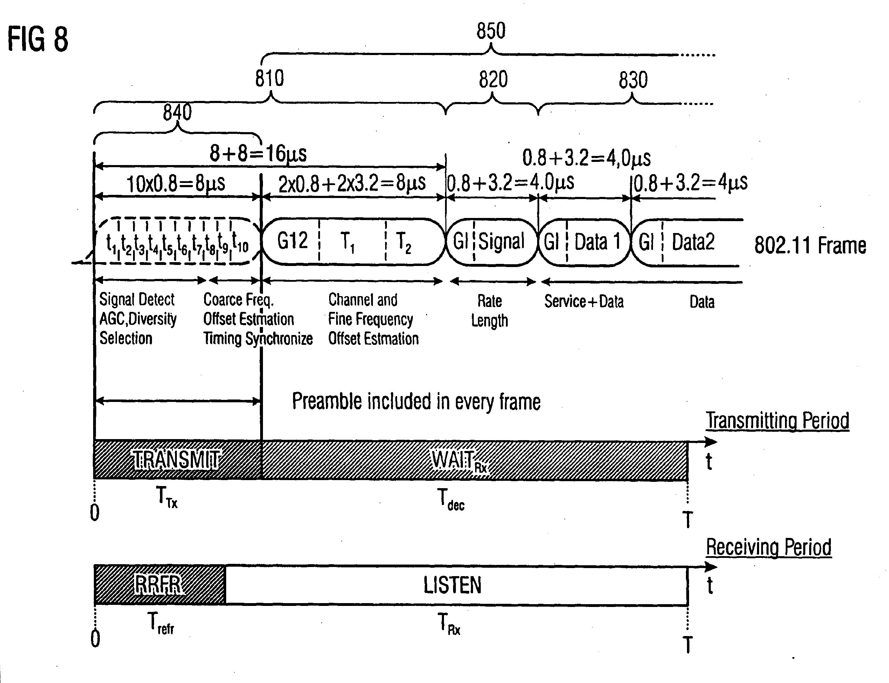

The upper part of Fig. 8 represents the frame structure of an ERP OFDM burst used in the 802.11 standard as described in "Wireless LAB medium access control (MAC) and physical layer (PHY) specifications," 1999, in the following referred to as [6], and the lower part of Fig. 8 an example for a corresponding transmitting period and receiving period.

As can be seen on this figure, a "preamble", which appears on all frames, is composed of a preamble 810 of 16 $\mu$s and a header 820 of 4 $\mu$s. The number of OFDM symbols contained in a frame is variable. However for a time slotted protocol, it is necessary and more efficient to use a fixed time slot duration. Therefore the number of OFDM symbols in DATA 830, $N_{DATA}$, is fixed in order to apply the synchronization scheme to a time slotted MAC protocol. Each symbol has a duration of 4 $\mu$s. Thus the duration of DATA 830 is equal to $N_{DATA} \cdot 4$ $\mu$s. Therefore the total length of a frame, which corresponds to one transmitting period of duration $T$, is equal to:

$$16\mu s + 4\mu s + N_{DATA} \cdot 4\mu s = T \qquad (5)$$

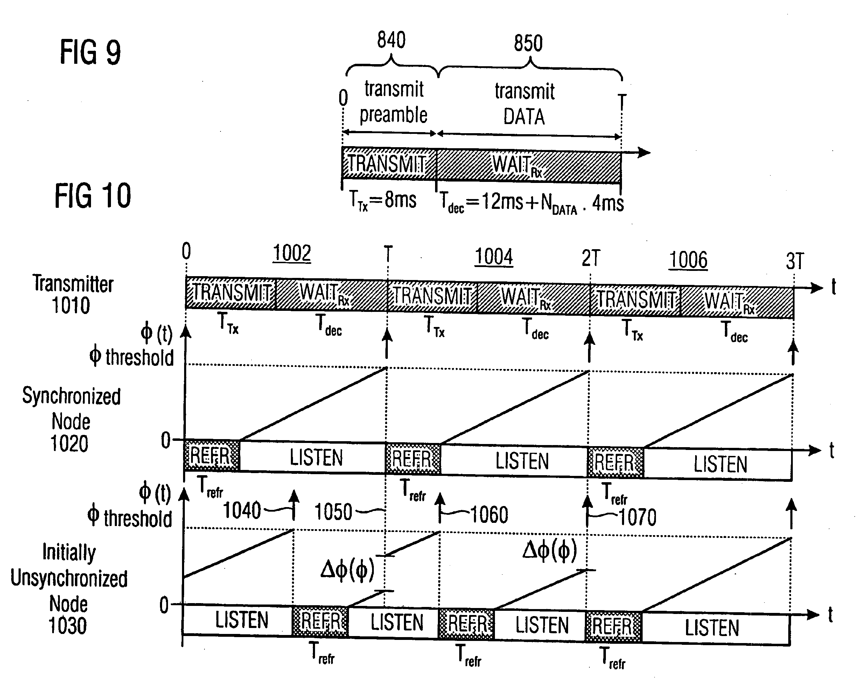

From the preamble shown on Fig. 8, the synchronization word used for the synchronization needs only to be the first part 840 of the preamble 810, which is used for signal detection and coarse frequency offset estimation. The duration of this part is equal to 8$\mu$s. With this synchronization word defined a preamble-based synchronization scheme is necessary. Therefore the transmission period of a node following the generalized time advance algorithm can be set in the following way: $T_{wait}$ = 0 $\mu$s, $T_{Tx}$ = 8 $\mu$s (840) and $T_{dec}$ = 12 + $N_{DATA} \cdot 4$ $\mu$s (850). During TRANSMIT, the first part of the preamble 840 is transmitted. Thus, a state model with four states: listen state 170, transmit state 180, receiver wait state 190 and refrectory state 320 is used. During WAIT$_{Rx}$, the rest of the frame 850 including payload data is transmitted. Fig. 9 represents the behavior of a transmitter during one time slot.

With the generalized time advance scheme, a receiver needs to identify only the preamble or part of the preamble before declaring that a synchronization message is being transmitted. Once the preamble is received, it will increment its phase $T_{dec}$ seconds later. Here $T_{dec}$ does not correspond to the time necessary to decode a synchronization message, but to the duration of DATA. Therefore it is assumed that the necessary decoding time is smaller or equal to $T_{dec}=N_{DATA} \cdot 4$ $\mu$s.

To help comprehending this implementation, Fig. 10 represents an exemplary behavior of three nodes: the top one 1010 is transmitting three consecutive 802.11 frames 1002, 1004, 1006, the second one 1020 is already synchronized and does not adjust its phase function when identifying the preamble, and the third one 1030 progressively adjusts its phase T seconds after the transmitter started transmitting.

An important difference between the original and the generalized schemes concerns the behavior of a node when receiving a synchronization message. In the original time advance scheme, if a node fired before having fully received and decoded a synchronization message, it would enter WAIT and discard partially received messages. As it can be observed on Fig. 10, between 0 and T (frame 1002), the unsynchronized node 1030 has completely received the synchronization message. However it fires 1040 while decoding it. At this moment, the node can either enter a transmitting or a receiving period. On the example, it enters a receiving period and will adjust its phase at t = T, i.e. $T_{dec}$ after the message was received. If it had entered a transmitting period, it would not have been able to increment its phase at t = T. In this case two choices are possible. Either discard the received message, or increment the phase when returning into a receiving period. In the simulation results shown earlier, incomplete messages were discarded when entering TRANSMIT.

As it can be furthermore observed on Fig. 10, between T and 2T (frame 1004), the unsynchronized node 1030 has completely received the synchronization signal. However it fires 1060 while receiving it. At this moment, the node can either enter a transmitting or a receiving period. On the example shown in Fig. 10, it enters again a receiving period and adjusts its phase at t = 2T (1070), i.e. $T_{dec}$ after the synchronization signal was received. If the node 1030 had entered a transmitting period, it would not have been able to increment its phase at t = 2T. In this case two choices are possible. Either continue receiving the missing part of the synchronization signal when returning into a receiving period, or more preferably, discard the partially received synchronization signal.

Therefore, embodiments of the node can be operative to continue receiving or continue decoding synchronization signals of neighbor nodes in a consecutive, repeated receiving period or discard partially received and/or partially decoded synchronization signals in a consecutive repeated receiving period.

AT t = 2T (1070) the unsynchronized node 1030 not only increases its phase but also reaches the threshold values, i.e. fires, therefore, starting from instant t = 2T (1070) all three nodes 1010, 1020 and 1030 are synchronized.

As described before, in case transmitter 1010 wants to transmit payload data in frames 1002 and 1004 synchronized node 1020 but not to initially unsynchronized node 1030, the unsynchronized node nevertheless uses the first part 840 of the preamble of the frames 1002 and 1004 to synchronize on transmitter 1010.

In case transmitter 1010 wants to transmit payload data in frame 1002 to the initially unsynchronized node 1030, node 1030 would be able to detect the first part 840 of the preamble as synchronization signal but would not be able to receive the payload data DATA correctly. In an embodiment, where nodes are operative to use additionally an acknowledge based protocol to acknowledge a successful reception of payload data, an embodiment of an initially unsynchronized node 1030 does not send an acknowledge signal to transmitter 1010. Without acknowledge a corresponding embodiment of a transmitter 1010 retransmits the payload data in frame 1004 to initially unsynchronized node 1030. Again, node 1030 would not receive the payload data correctly and would not send an acknowledge. Therefore, transmitter 1010 retransmits again the payload data in frame 1006 to node 1030, which now is synchronized to transmitter 1010, and therefore able to receive the payload data correctly. Thus, there is no need to distinguish between a synchronization phase and payload data transmission phase.

To summarize the aforementioned, the invention addresses, for example, problems related to timing synchronization of decentralized wireless networks. The described synchronization strategy is based on a spontaneous synchronization phenomena observed in nature, for example, in South-East-Asia, where huge swarms of fireflies are blinking in perfect synchrony. In a previous patent application (EP 05015250.3) this model was adapted to wireless networks, also referred to as time advance synchronization and improved the achievable accuracy when considering a fully meshed network. When directly applying this time advance synchronization to a meshed network, synchronization is prevented when nodes have only few neighbors. As a node cannot receive while transmitting, it can happen that because of initial conditions, neighboring nodes transmit almost at the same time, and are never able to synchronize. The generalized time advance synchronization avoids this situation by giving more flexibility to nodes. The principle is inherently simple, exhibits robustness towards various kinds of delays, and is therefore suitable as a synchronization protocol, for example, for decentralized CDMA, OFDM, TDMA (time division multiple access) time-wise structured FDMA (frequency division multiple access) or IDMA (interleave division multiple access) based wireless networks.

As a node cannot receive while transmitting (deafness), it can happen that neighbor nodes are deaf to each others synchronization signals. The generalized time advance synchronization scheme avoids this situation by giving more flexibility to nodes. The principle is inherently simple, and is simpler to integrate into existing systems such as IEEE 802.11. Thus, there is also no need to make a distinction between a synchronization phase and a data transmission phase.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer program runs on a computer.

## Claims

1.    Apparatus for synchronizing a first transmit or receive device to a second transmit or receive device, comprising:

a receiver (110) adapted to receive and detect a synchronization signal (140) from said second transmit or receive device;
a transmitter (130) adapted to transmit said synchronization signal (140) which after a synchronization period is in synchronism with the synchronization signal (140) from the second transmit or receive device;
a processing unit (120), **characterized by** said processing unit (120) being adapted to, during a receiving period (164):

to increase, after a predefined non-listening time $(T, T + T_{refr})$ an internal signal value $(\Phi)$ according to a given first function $(\Phi(t))$ over time, to increase said signal value $(\Phi)$ according to a second function $(\Delta\Phi(\Phi))$ upon receiving a detection signal (150) from said receiver (110),
to compare said internal signal value $(\Phi)$ with a threshold value $(\Phi_{threshold})$ when the apparatus is in a first control state (170) associated to said receiving period (164), and to reset the internal signal value $(\Phi)$ when the internal signal value equals the threshold value $(\Phi_{threshold})$,
to decide based on a period variable (next) whether to repeat (174) said receiving period (164) when said internal signal value equals (172) said threshold value, and
in case of a repetition, to start to increase said internal signal value $(\Phi)$ in said repeated receiving period without transmitting said synchronization signal (140) using a different non-listening time $(T_{refr})$ or without a non-listening time;

or wherein said processing unit (120) is further **characterized by** being adapted to, during a transmitting period (162):

to control said transmitter (130) to transmit said synchronization signal (140) in a second control state (180) associated to said transmitting period (162), which is reached when said processing unit decides to change to said transmitting period when said internal signal value equals (172) said threshold value,
to wait a receiver waiting time ($T_{waitRx}$, $T_{dec}$) in a third control state (190) associated to said transmitting period (162), which begins after said transmitting of said synchronization signal (140) is terminated (182), wherein said receiver waiting time ($T_{waitRx}$, $T_{dec}$) is greater than zero and smaller than a duration (T) of said transmitting period (162),
to decide based on said period variable (next) whether to repeat (194) said transmitting mode (162), and
to control, in case of a repetition, said transmitter (130) to transmit said synchronization signal (140) in said second control state (180) without a listening period (164) in between.

2. Apparatus according to claim 1, wherein said processing unit (120) is implemented to control said receiver (110) to be ready to receive and/or detect said synchronization signal (140) from said second transmit or receive device in a fourth control state (320) for a given refractory time ($T_{refr}$), said refractory time being larger than zero and smaller than a duration (T) of a receiving period, and to change into said first control state (170) when said refractory time elapsed (322).

3. Apparatus according to claim 1 or 2, wherein said processing unit (120) is implemented to control said transmitter (130) to wait a transmitter waiting time ($T_{waitTx}$, $T_{wait}$), the transmitter waiting time being greater than zero and smaller than said duration (T) of said transmitting period (162), in a fifth control state (310) associated to said transmitting period (162), which is reached, when said processing unit (120) being in a first control state (170) decides based on said period value (next) to change into said transmitting period (162) when said internal signal value is equal to said threshold value, or when said processing unit (120) being in said third control state (190) decides (194) to repeat in said transmitting period.

4. Apparatus according to one of the claims 1 to 3, wherein said duration (T) of said transmitting period (162) is equal to a duration (T) of said receiving period (164).

5. Apparatus according to one of the claim 1 to 4, wherein said processing unit (120) is operative:

   to control said receiver (110) to complete an ongoing reception of said synchronization signal (140), and to detect said synchronization signal or to complete an ongoing detection of said synchronization signal, when said processing unit (120) decides to repeat said receiving period, and
   to increment said internal signal value only when being in said first control state (170) again.

6. Apparatus according to one of the claims 1 to 5, wherein said processing unit (120) is operative to control said receiver (110) to not start a detection or discard an ongoing detection of said synchronization signal, when said processing unit (120) decides to change (176) from said receiving period (164) to said transmitting period (162).

7. Apparatus according to one of the claims 1 to 6, wherein said processing unit (120) is operative to determine said period variable (next) based on a third function.

8. Apparatus according to one of the claims 1 to 7, wherein said period variable (next) has a first (Tx) or a second value (Rx) and wherein said processing unit (120) is implemented:

   to change (176) from said receiving period (164) to said transmitting period (162) or to repeat (194) said transmitting period (162) in case said period variable (next) has a first value (Tx), or
   to change (196) from said transmitting period (162) to said receiving period (164) or to repeat (174) said receiving period (164) in case said period variable (next) has said second value (Rx).

9. Apparatus according to claim 8, wherein said processing unit (120) is operative to determine said period variable (next) based on a third function, and wherein said third function is a pseudo-random sequence from a set of orthogonal sequences, preferably a set of Gold sequences, providing a sequence of first (Tx) and second (Rx) values.

10. Apparatus according to claim 8, wherein said processing unit is operative to determine said period variable based on a third function, and wherein said third function is a random function, determining said first value (Tx) and said second value (Rx) of said period variable (next) based on a random process.

11. Apparatus according to one of the claims 8 to 10, wherein said processing unit (120) is implemented to track whether during said receiving period (164) said internal signal value ($\Phi$) has been increased based on said second function

($\Delta\Phi(\Phi)$), and to set said period variable (next) to have said second value (Rx) when for a predetermined number of consecutive receiving periods said internal signal value ($\Phi$) has not been increased.

12. Apparatus according to claim 11, wherein said first (Tx) or second value (Rx) of said period variable (next) is determined based on a random function after said predetermined number of consecutive receiving periods without increase of said internal signal value ($\Phi$).

13. Apparatus according to one of the claims 1 to 12, wherein said receiver (110) is operative to receive a predefined part of a frame according to a communication protocol and to detect said predefined part (840) of said frame as said synchronization signal (140).

14. Apparatus according to claim 13, wherein said communication protocol is a wireless local area network (WLAN) protocol, and wherein said predefined part (840) is a part of a preamble (810) of said frame.

15. Apparatus according to claim 14, wherein said frame has a predefined length, which is equal to said duration (T) of said transmitting period (162).

16. Apparatus according to claim 15, wherein said frame is realized according to a ERP OFDM (Enhanced Rate PHY Orthogonal Frequency Division Multiplexing) version of a 802.11 WLAN communication protocol, and wherein said duration of said frame and of said transmitting period is defined based on the following equation:

$$16\mu s \ + \ 4\mu s \ + \ N_{DATA} \cdot 4\mu s \ = \ T$$

wherein $N_{DATA}$ is a number of OFDM symbols, each OFDM symbol having a duration of 4 $\mu$s, wherein the 16 $\mu$s are the duration of said preamble (810) and wherein the 4 $\mu$s are the duration of a header (820) and wherein a first half (840) of said preamble (810) with a duration of 8 $\mu$s is used as synchronization signal (140).

17. Transmit or receive device, comprising:

> an apparatus for synchronizing a first transmit or receive device according to one of the claims 1 to 16; and
> a controller for controlling a data transmission or a data reception based on a timing of said synchronization signal (140).

18. Method for synchronizing a first transmit or receive device to a second transmit or receive device, comprising during a receiving period (164):

> increasing after a predefined non-listening time (T, T + $T_{refr}$) an internal signal value ($\Phi$) according to a given first function ($\Phi(t)$) over time being in a first control state (170) associated to said receiving period (164);
> receiving and detecting a synchronization signal (140);
> increasing said internal signal value ($\Phi$) according to a second function ($\Delta\Phi(\Phi)$) upon detecting said synchronization signal (140) being in said first control state (170);
> comparing said internal signal value ($\Phi$) with a given threshold value ($\Phi_{threshold}$) being in said first control state (170);
> deciding based on a period value (next) whether to repeat (174) said receiving period (164), when said internal signal value ($\Phi$) equals said threshold value ($\Phi_{threshold}$) and resetting the internal signal value ($\Phi$) when the internal signal value equals the threshold value ($\Phi_{threshold}$), and
> in case of a repetition, starting to increase said internal signal value in said repeated receiving period without transmitting said synchronization signal (140) using a different non-listening time ($T_{refr}$) or without a non-listening time;

> or further comprising during a transmitting period (162):

> transmitting said synchronization signal (140) in a second control state (180) associated to said transmitting period (162);
> waiting a receiver waiting time ($T_{waitRx}$, $T_{dec}$) in a third control state (190) associated to said transmitting period (162), which begins after said transmitting of said synchronization signal (140) is terminated (182), wherein said receiver waiting time is greater than zero and smaller than a duration (T) of said transmitting period (162),

deciding based on said period value (next) whether to repeat (194) said transmitting period (162) when said receiver waiting time is over, and

performing, in case of a repetition, said transmission of said synchronization signal (140) in a repeated transmitting period (162) without a listening period in between.

19. Computer program having a program code for performing a method in accordance with claim 18, when the program runs on a computer.

**Patentansprüche**

1. Gerät zum Synchronisieren einer ersten Sende- oder Empfangsvorrichtung mit einer zweiten Sende- oder Empfangsvorrichtung, das folgende Merkmale aufweist:

   einen Empfänger (110), der angepasst ist, um ein Synchronisationssignal (140) von der zweiten Sende- oder Empfangsvorrichtung zu empfangen und zu erfassen;
   einen Sender (130), der angepasst ist, um das Synchronisationssignal (140), das nach einer Synchronisationsperiode mit dem Synchronisationssignal (140) von der zweiten Sende- oder Empfangsvorrichtung in Synchronismus ist, zu senden;
   eine Verarbeitungseinheit (120), die **dadurch gekennzeichnet ist, dass** die Verarbeitungseinheit (120) während einer Empfangsperiode (164) angepasst ist zum:

   Erhöhen, nach einer vordefinierten Nichthörzeit ($T$, $T + T_{refr}$), eines Innensignalwerts ($\Phi$) gemäß einer gegebenen ersten Funktion ($\Phi(t)$) im Zeitablauf, um den Signalwert ($\Phi$) gemäß einer zweiten Funktion ($\Delta\Phi(\Phi)$) auf ein Empfangen eines Erfassungssignals (150) von dem Empfänger (110) hin zu erhöhen,
   Vergleichen des Innensignalwerts ($\Phi$) mit einem Schwellenwert ($\Phi_{threshold}$), wenn das Gerät sich in einem ersten Steuerzustand (170) befindet, der der Empfangsperiode (164) zugeordnet ist, und Rücksetzen des Innensignalwerts ($\Phi$), wenn der Innensignalwert gleich dem Schwellenwert ($\Phi_{threshold}$) ist,
   Entscheiden, basierend auf einer Periodenvariablen (next), ob die Empfangsperiode (164) wiederholt werden soll (174), wenn der Innensignalwert gleich (172) dem Schwellenwert ist, und
   In dem Falle einer Wiederholung, Beginnen, den Innensignalwert ($\Phi$) in der wiederholten Empfangsperiode zu erhöhen, ohne das Synchronisationssignal (140) zu senden, unter Verwendung einer anderen Nichthörzeit ($T_{refr}$), oder ohne eine Nichthörzeit;

   oder wobei die Verarbeitungseinheit (120) ferner **dadurch gekennzeichnet ist, dass** sie während einer Sendeperiode (162) angepasst ist zum:

   Steuern des Senders (130), um das Synchronisationssignal (140) in einem zweiten Steuerzustand (180) zu senden, der der Sendeperiode (162) zugeordnet ist, die erreicht wird, wenn die Verarbeitungseinheit entscheidet, zu der Sendeperiode zu wechseln, wenn der Innensignalwert gleich (172) dem Schwellenwert ist,
   Warten, für die Dauer einer Empfängerwartezeit ($T_{waitRx}$, $T_{dec}$) in einem dritten Steuerzustand (190), der der Sendeperiode (162) zugeordnet ist, die beginnt, nachdem das Senden des Synchronisationssignals (140) abgeschlossen ist (182), wobei die Empfängerwartezeit ($T_{waitRx}$, $T_{dec}$) größer als Null und kleiner als eine Dauer (T) der Sendeperiode (162) ist,
   Entscheiden, basierend auf der Periodenvariablen (next), ob der Sendemodus (162) wiederholt werden soll, und
   Steuern, in dem Falle einer Wiederholung, des Senders (130), um das Synchronisationssignal (140) in dem zweiten Steuerzustand (180) ohne eine Hörperiode (164) dazwischen zu senden.

2. Gerät gemäß Anspruch 1, bei dem die Verarbeitungseinheit (120) implementiert ist, um den Empfänger (110) so zu steuern, dass er bereit ist, das Synchronisationssignal (140) von der zweiten Sende- oder Empfangsvorrichtung in einem vierten Steuerzustand (320) für eine gegebene Refraktärzeit ($T_{refr}$) zu empfangen und/oder zu erfassen, wobei die Refraktärzeit größer als Null und kleiner als eine Dauer (T) einer Empfangsperiode ist, und um in den ersten Steuerzustand (170) zu wechseln, wenn die Refraktärzeit verstrichen ist (322).

3. Gerät gemäß Anspruch 1 oder 2, bei dem die Verarbeitungseinheit (120) implementiert ist, um den Sender (130) so zu steuern, dass er für die Dauer einer Senderwartezeit ($T_{waitRx}$, $T_{dec}$), wobei die Senderwartezeit größer als Null und kleiner als die Dauer (T) der Sendeperiode (162) ist, in einem fünften Steuerzustand (310) wartet, der der Sendeperiode (162) zugeordnet ist, die erreicht ist, wenn die Verarbeitungseinheit (120), die sich in einem ersten Steuerzustand (170) befindet, basierend auf dem Periodenwert (next) entscheidet, in die Sendeperiode (162) zu wechseln, wenn der Innensignalwert gleich dem Schwellenwert ist oder wenn die Verarbeitungseinheit (120), die sich in dem dritten Steuerzustand (190) befindet, entscheidet (194), die Sendeperiode zu wiederholen.

4.  Gerät gemäß einem der Ansprüche 1 bis 3, bei dem die Dauer (T) der Sendeperiode (162) gleich einer Dauer (T) der Empfangsperiode (164) ist.

5.  Gerät gemäß einem der Ansprüche 1 bis 4, bei dem die Verarbeitungseinheit (120) wirksam ist zum:

    Steuern des Empfängers (110), um einen laufenden Empfang des Synchronisationssignals (140) abzuschließen und um das Synchronisationssignal zu erfassen, oder um eine laufende Erfassung des Synchronisationssignals abzuschließen, wenn die Verarbeitungseinheit (120) entscheidet, die Empfangsperiode zu wiederholen, und Inkrementieren des Innensignalwerts lediglich, wenn sie sich wieder in dem ersten Steuerzustand (170) befindet.

6.  Gerät gemäß einem der Ansprüche 1 bis 5, bei dem die Verarbeitungseinheit (120) wirksam ist, um den Empfänger (110) so zu steuern, dass er keine Erfassung startet oder eine fortlaufende Erfassung des Synchronisationssignals verwirft, wenn die Verarbeitungseinheit (120) entscheidet, von der Empfangsperiode (164) in die Sendeperiode (162) zu wechseln.

7.  Gerät gemäß einem der Ansprüche 1 bis 6, bei dem die Verarbeitungseinheit (120) wirksam ist, die Periodenvariable (next) basierend auf einer dritten Funktion zu bestimmen.

8.  Gerät gemäß einem der Ansprüche 1 bis 7, bei dem die Periodenvariable (next) einen ersten (Tx) oder einen zweiten Wert (Rx) aufweist, und bei dem die Verarbeitungseinheit (120) implementiert ist zum:

    Wechseln (176) von der Empfangsperiode (164) in die Sendeperiode (162) oder Wiederholen (194) der Sendeperiode (162), falls die Periodenvariable (next) einen ersten Wert (Tx) aufweist, oder Wechseln (196) von der Sendeperiode (162) in die Empfangsperiode (164) oder Wiederholen (174) der Empfangsperiode (164), falls die Periodenvariable (next) den zweiten Wert (Rx) aufweist.

9.  Gerät gemäß Anspruch 8, bei dem die Verarbeitungseinheit (120) wirksam ist, um die Periodenvariable (next) basierend auf einer dritten Funktion zu bestimmen, und bei dem die dritte Funktion eine Pseudozufallssequenz aus einem Satz von orthogonalen Sequenzen, vorzugsweise einem Satz von Gold-Sequenzen, ist, die eine Sequenz aus dem ersten (Tx) und zweiten (Rx) Wert bereitstellt.

10. Gerät gemäß Anspruch 8, bei dem die Verarbeitungseinheit wirksam ist, um die Periodenvariable basierend auf einer dritten Funktion zu bestimmen, und bei dem die dritte Funktion eine Zufallsfunktion ist, die den ersten Wert (Tx) und den zweiten Wert (Rx) der Periodenvariablen (next) basierend auf Zufallsprozess bestimmt.

11. Gerät gemäß einem der Ansprüche 8 bis 10, bei dem die Verarbeitungseinheit (120) implementiert ist, um nachzuführen, ob während der Empfangsperiode (164) der Innensignalwert ($\Phi$) basierend auf der zweiten Funktion ($\Delta\Phi$ ($\Phi$)) erhöht worden ist, und um die Periodenvariable (next) so einzustellen, dass sie den zweiten Wert (Rx) aufweist, wenn der Innensignalwert ($\Phi$) für die Dauer einer vorbestimmten Anzahl von aufeinanderfolgenden Empfangsperioden nicht erhöht worden ist.

12. Gerät gemäß Anspruch 11, bei dem der erste (Tx) oder der zweite Wert (Rx) der Periodenvariablen (next) basierend auf einer Zufallsfunktion nach der vorbestimmten Anzahl von aufeinanderfolgenden Empfangsperioden ohne eine Erhöhung des Innensignalwerts ($\Phi$) bestimmt wird.

13. Gerät gemäß einem der Ansprüche 1 bis 12, bei dem der Empfänger (110) wirksam ist, um einen vordefinierten Teil eines Rahmens gemäß einem Kommunikationsprotokoll zu empfangen, und um den vordefinierten Teil (840) des Rahmens als das Synchronisationssignal (140) zu erfassen.

14. Gerät gemäß Anspruch 13, bei dem das Kommunikationsprotokoll ein Protokoll eines drahtlosen lokalen Netzes (WLAN-Protokoll) ist, und bei dem der vordefinierte Teil (840) ein Teil einer Präambel (810) des Rahmens ist.

**15.** Gerät gemäß Anspruch 14, bei dem der Rahmen eine vordefinierte Länge aufweist, die gleich der Dauer (T) der Sendeperiode (162) ist.

**16.** Gerät gemäß Anspruch 15, bei dem der Rahmen gemäß einer ERP-OFDM-Version (Version eines PHI-Orthogonalfrequenzmultiplexens mit verbesserter Rate) eines 802.11-WLAN-Kommunikationsprotokolls realisiert ist, und bei dem die Dauer des Rahmens und der Sendeperiode basierend auf der folgenden Gleichung definiert ist:

$$16\mu s + 4\mu s + N_{DATA} \cdot 4\mu s = T$$

wobei $N_{DATA}$ eine Anzahl von OFDM-Symbolen ist, wobei jedes OFDM-Symbol eine Dauer von 4 $\mu$s aufweist, wobei die 16 $\mu$s die Dauer der Präambel (810) sind, und wobei die 4 $\mu$s die Dauer eines Anfangsblocks (820) sind und wobei eine erste Hälfte (840) der Präambel (810) mit einer Dauer von 8 $\mu$s als das Synchronisationssignal (140) verwendet wird.

**17.** Sende- oder Empfangsvorrichtung, die folgende Merkmale aufweist:

ein Gerät zum Synchronisieren einer ersten Sende- oder Empfangsvorrichtung gemäß einem der Ansprüche 1 bis 16; und
eine Steuerung zum Steuern einer Datenübertragung oder eines Datenempfangs basierend auf einer Zeitsteuerung des Synchronisationssignals (140).

**18.** Verfahren zum Synchronisieren einer ersten Sende- oder Empfangsvorrichtung mit einer zweiten Sende- oder Empfangsvorrichtung, das während einer Empfangsperiode (164) folgende Schritte aufweist:

Erhöhen, nach einer vordefinierten Nichthörzeit (T, T + $T_{refr}$), eines Innensignalwerts ($\Phi$) gemäß dem, dass sich eine gegebene erste Funktion ($\Phi(t)$) im Zeitablauf in einem ersten Steuerzustand (170), der der Empfangsperiode (164) zugeordnet ist, befindet;
Empfangen und Erfassen eines Synchronisationssignals (140);
Erhöhen des Innensignalwerts ($\Phi$) gemäß dem, dass sich eine zweite Funktion ($\Delta\Phi(\Phi)$) auf ein Erfassen des Synchronisationssignals (140) hin in dem ersten Steuerzustand (170) befindet;
Vergleichen des Innensignalwerts ($\Phi$) mit einem gegebenen Schwellenwert ($\Phi_{threshold}$), der sich in dem ersten Steuerzustand (170) befindet;
Entscheiden, basierend auf einem Periodenwert (next), ob die Empfangsperiode (164) wiederholt werden soll (174), wenn der Innensignalwert ($\Phi$) gleich dem Schwellenwert ($\Phi_{threshold}$) ist, und Rücksetzen des Innensignalwerts ($\Phi$), wenn der Innensignalwert gleich dem Schwellenwert ($\Phi_{threshold}$) ist, und
in dem Falle einer Wiederholung, Beginnen, den Innensignalwert in der wiederholten Empfangsperiode zu erhöhen, ohne das Synchronisationssignal (140) zu senden, unter Verwendung einer anderen Nichthörzeit ($T_{refr}$) oder ohne eine Nichthörzeit;

oder das ferner während einer Sendeperiode (162) folgende Schritte aufweist:

Senden des Synchronisationssignals (140) in einem zweiten Steuerzustand (180), der der Sendeperiode (162) zugeordnet ist;
Warten, für die Dauer einer Empfängerwartezeit ($T_{waitRx}$, $T_{dec}$) in einem dritten Steuerzustand (190), der der Sendeperiode (162) zugeordnet ist, die beginnt, nachdem das Senden des Synchronisationssignals (140) abgeschlossen ist (182), wobei die Empfängerwartezeit größer als Null und kleiner als eine Dauer (T) der Sendeperiode (162) ist,
Entscheiden, basierend auf dem Periodenwert (next), ob die Sendeperiode (162) wiederholt werden soll, wenn die Empfängerwartezeit vorüber ist, und
Durchführen, in dem Falle einer Wiederholung, des Sendens des Synchronisationssignals (140) in einer wiederholten Sendeperiode (162) ohne eine Hörperiode dazwischen.

**19.** Computerprogramm mit einem Programmcode zum Durchführen eines Verfahrens gemäß Anspruch 18, wenn das Programm auf einem Computer abläuft.

**Revendications**

1. Appareil pour synchroniser un premier dispositif émetteur ou récepteur avec un deuxième dispositif émetteur ou récepteur, comprenant:

   un récepteur (110) adapté pour recevoir et détecter un signal de synchronisation (140) dudit deuxième dispositif émetteur ou récepteur;
   un émetteur (130) adapté pour transmettre ledit signal de synchronisation (140) qui, après une période de synchronisation, est en synchronisme avec le signal de synchronisation (140) du deuxième dispositif émetteur ou récepteur;
   une unité de traitement (120), **caractérisée par le fait que** ladite unité de traitement (120) est adaptée, pendant une période de réception (164):

   pour augmenter, après un temps de non-écoute prédéfini (T, T + $T_{refr}$), une valeur de signal interne ($\Phi$) selon une première fonction donnée ($\Phi(t)$) dans le temps, pour augmenter ladite valeur de signal ($\Phi$) selon une deuxième fonction ($\Delta\Phi(\Phi)$) à la réception d'un signal de détection (150) dudit récepteur (110),
   pour comparer ladite valeur de signal interne ($\Phi$) à une valeur de seuil ($\Phi_{threshold}$) lorsque l'appareil est dans un premier état de commande (170) associé à ladite période de réception (164), et pour remettre à zéro la valeur de signal interne ($\Phi$) lorsque la valeur de signal interne est égale à la valeur de seuil ($\Phi_{threshold}$),
   pour décider sur base d'une variable de période (suivante) s'il y a lieu de répéter (174) ladite période de réception (164) lorsque ladite valeur de signal interne (172) est égale à ladite valeur de seuil, et
   en cas de répétition, pour commencer à augmenter ladite valeur de signal interne ($\Phi$) dans ladite période de réception répétée sans transmettre ledit signal de synchronisation (140) à l'aide d'un temps de non-écoute différent ($T_{refr}$) ou sans un temps de non-écoute;

   ou dans lequel ladite unité de traitement (120) est par ailleurs **caractérisée par le fait qu'**elle est adaptée, pendant une période de transmission (162):

   pour commander ledit émetteur (130) de manière à transmettre ledit signal de synchronisation (140) dans un deuxième état de commande (180) associé à ladite période de transmission (162) qui est atteinte lorsque ladite unité de traitement décide de changer à ladite période de transmission où ladite valeur de signal interne (172) est égale à ladite valeur de seuil,
   pour attendre un temps d'attente de récepteur ($T_{waitRx}$, $T_{dec}$) dans un troisième état de commande (190) associé à ladite période de transmission (162) qui commence après que ladite transmission dudit signal de synchronisation (140) soit terminée (182), où ledit temps d'attente de récepteur ($T_{waitRx}$, $T_{dec}$) est supérieur à zéro et inférieur à une durée (T) de ladite période de transmission (162),
   pour décider, sur base de ladite variable de période (suivante), s'il y a lieu de répéter (194) ledit mode de transmission (162), et
   pour commander, en cas de répétition, ledit émetteur (130) de manière à transmettre ledit signal de synchronisation (140) dans ledit deuxième état de commande (180) sans période d'écoute (164) intermédiaire.

2. Appareil selon la revendication 1, dans lequel ladite unité de traitement (120) est mise en oeuvre pour commander ledit récepteur (110) de manière à être prêt à recevoir et/ ou à détecter ledit signal de synchronisation (140) dudit deuxième dispositif émetteur ou récepteur dans un quatrième état de commande (320) pendant un temps réfractaire donné ($T_{refr}$), ledit temps réfractaire étant supérieur à zéro et inférieur à une durée (T) d'une période de réception, et pour changer audit premier état de commande (170) lorsque ledit temps réfractaire est écoulé (322).

3. Appareil selon la revendication 1 ou 2, dans lequel ladite unité de traitement (120) est mise en oeuvre pour commander ledit émetteur (130) de manière à attendre un temps d'attente d'émetteur ($T_{waitTx}$, $T_{wait}$), le temps d'attente d'émetteur étant supérieur à zéro et inférieur à ladite durée (T) de ladite période de transmission (162), dans un cinquième état de commande (310) associé à ladite période de transmission (162) qui est atteinte lorsque ladite unité de traitement (120) dans un premier état de commande (170) décide, sur base de ladite valeur de période (suivante), de changer à ladite période de transmission (162) lorsque ladite valeur de signal interne est égale à ladite valeur de seuil, ou lorsque ladite unité de traitement (120) dans ledit troisième état de commande (190) décide (194) de répéter dans ladite période de transmission.

4. Appareil selon l'une des revendications 1 à 3, dans lequel ladite durée (T) de ladite période de transmission (162) est égale à une durée (T) de ladite période de réception (164).

5. Appareil selon l'une des revendications 1 à 4, dans lequel ladite unité de traitement (120) est opérationnelle:

pour commander ledit récepteur (110) de manière à terminer une réception en cours dudit signal de synchronisation (140), et à détecter ledit signal de synchronisation ou à terminer une détection en cours dudit signal de synchronisation lorsque ladite unité de traitement (120) décide de répéter ladite période de réception, et pour incrémenter ladite valeur de signal interne uniquement lorsqu'elle est à nouveau dans ledit premier état de commande (170).

6. Appareil selon l'une des revendications 1 à 5, dans lequel ladite unité de traitement (120) est opérationnelle pour commander ledit récepteur (110) de manière à ne pas commencer une détection ou à ne pas éliminer une détection en cours dudit signal de synchronisation lorsque ladite unité de traitement (120) décide de changer (176) de ladite période de réception (164) à ladite période de transmission (162).

7. Appareil selon l'une des revendications 1 à 6, dans lequel ladite unité de traitement (120) est opérationnelle pour déterminer ladite variable de période (suivante) sur base d'une troisième fonction.

8. Appareil selon l'une des revendications 1 à 7, dans lequel ladite variable de période (suivante) a une première (Tx) ou une deuxième valeur (Rx) et dans lequel ladite unité de traitement (120) est mise en oeuvre:

pour changer (176) de ladite période de réception (164) à ladite période de transmission (162) ou pour répéter (194) ladite période de transmission (162) au cas où ladite variable de période (suivante) a une première valeur (Tx), ou
pour changer (196) de ladite période de transmission (162) à ladite période de réception (164) ou pour répéter (174) ladite période de réception (164) au cas où ladite variable de période (suivante) a ladite deuxième valeur (Rx).

9. Appareil selon la revendication 8, dans lequel ladite unité de traitement (120) est opérationnelle pour déterminer ladite variable de période (suivante) sur base d'une troisième fonction, et dans lequel ladite troisième fonction est une séquence pseudo-aléatoire parmi un ensemble de séquences orthogonales, de préférence un ensemble de séquences Gold, fournissant une séquence de premières (Tx) et deuxièmes (Rx) valeurs.

10. Appareil selon la revendication 8, dans lequel ladite unité de traitement est opérationnelle pour déterminer ladite variable de période sur base d'une troisième fonction, et dans lequel ladite troisième fonction est une fonction aléatoire déterminant ladite première valeur (Tx) et ladite deuxième valeur (Rx) de ladite variable de période (suivante) sur base d'un processus aléatoire.

11. Appareil selon l'une des revendications 8 à 10, dans lequel ladite unité de traitement (120) est mise en oeuvre pour dépister si, pendant ladite période de réception (164), ladite valeur de signal interne ($\Phi$) a été augmentée sur base de ladite deuxième fonction ($\Delta\Phi(\Phi)$), et pour régler ladite variable de période (suivante) de manière à avoir ladite deuxième valeur (Rx) lorsque, pendant un nombre prédéterminé de périodes de réception consécutives, ladite valeur de signal interne ($\Phi$) n'a pas été augmentée.

12. Appareil selon la revendication 11, dans lequel ladite première (Tx) ou deuxième valeur (Rx) de ladite variable de période (suivante) est déterminée sur base d'une fonction aléatoire après ledit nombre prédéterminé de périodes de réception consécutives sans augmentation de ladite valeur de signal interne ($\Phi$).

13. Appareil selon l'une des revendications 1 à 12, dans lequel ledit récepteur (110) est opérationnel pour recevoir une partie prédéfinie d'une trame selon un protocole de communication et pour détecter ladite partie prédéfinie (840) de ladite trame comme dit signal de synchronisation (140).

14. Appareil selon la revendication 13, dans lequel ledit protocole de communication est un protocole de réseau local (WLAN) sans fil, et dans lequel ladite partie prédéfinie (840) est une partie d'un préambule (810) de ladite trame.

15. Appareil selon la revendication 14, dans lequel ladite trame a une longueur prédéfinie qui est égale à ladite durée (T) de ladite période de transmission (162).

16. Appareil selon la revendication 15, dans lequel ladite trame est réalisée selon une version ERP OFDM (Multiplexage par Division de Fréquence Orthogonale PHY à Débit Augmenté) d'un protocole de communication WLAN 802.11, et dans lequel ladite durée de ladite trame et de ladite période de transmission est définie sur base de l'équation suivante:

$$16\mu s + 4\mu s + N_{DATA} \cdot 4\mu s = T$$

où $N_{DATA}$ est un nombre de symboles OFDM, chaque symbole OFDM ayant une durée de 4 $\mu$s, où les 16 $\mu$s sont la durée dudit préambule (810) et où les 4 $\mu$s sont la durée d'un en-tête (820) et où une première moitié (840) dudit préambule (810) avec une durée de 8 $\mu$s est utilisée comme signal de synchronisation (140).

**17.** Dispositif émetteur ou récepteur, comprenant:

un appareil pour synchroniser un premier dispositif émetteur ou récepteur selon l'une des revendications 1 à 16; et
un contrôleur pour commander une transmission de données ou une réception de données sur base d'un timing dudit signal de synchronisation (140).

**18.** Procédé pour synchroniser un premier dispositif émetteur ou récepteur avec deuxième dispositif émetteur ou récepteur, comprenant pendant une période de réception (164):

augmenter, après un temps de non-écoute prédéfini (T, T + $T_{refr}$), une valeur de signal interne ($\Phi$) selon une première fonction donnée ($\Phi(t)$) dans le temps dans un premier état de commande (170) associé à ladite période de réception (164);
recevoir et détecter un signal de synchronisation (140);
augmenter ladite valeur de signal interne ($\Phi$) selon une deuxième fonction ($\Delta\Phi(\Phi)$) à la détection dudit signal de synchronisation (140) dans ledit premier état de commande (170);
comparer ladite valeur de signal interne ($\Phi$) à une valeur de seuil donnée ($\Phi_{threshold}$) dans ledit premier état de commande (170);
décider, sur base d'une valeur de période (suivante), s'il y a lieu de répéter (174) ladite période de réception (164) lorsque ladite valeur de signal interne ($\Phi$) est égale à ladite valeur de seuil ($\Phi_{threshold}$) et de remettre à zéro la valeur de signal interne ($\Phi$) lorsque la valeur de signal interne est égale la valeur de seuil ($\Phi_{threshold}$), et en cas de répétition, commencer à augmenter ladite valeur de signal interne dans ladite période de réception répétée sans transmettre ledit signal de synchronisation (140) à l'aide d'un temps de non-écoute différent ($T_{refr}$) ou sans temps de non-écoute;

ou comprenant par ailleurs, pendant une période de transmission (162):

transmettre ledit signal de synchronisation (140) dans un deuxième état de commande (180) associé à ladite période de transmission (162);
attendre un temps d'attente de récepteur ($T_{waitRx}$, $T_{dec}$) dans un troisième état de commande (190) associé à ladite période de transmission (162) qui commence après que ladite transmission dudit signal de synchronisation (140) soit terminée (182), où ledit temps d'attente de récepteur est supérieur à zéro et inférieur à une durée (T) de ladite période de transmission (162),
décider, sur base de ladite valeur de période (suivante) s'il y a lieu de répéter (194) ladite période de transmission (162) lorsque ledit temps d'attente de récepteur est écoulé, et
effectuer, en cas de répétition, ladite transmission dudit signal de synchronisation (140) dans une période de transmission répétée (162) sans période d'écoute intermédiaire.

**19.** Programme d'ordinateur présentant un code de programme pour réaliser un procédé selon la revendication 18 lorsque le programme est exécuté sur un ordinateur.

EP 1 852 998 B1

# FIG 1A

140 → [ 110 ] →150→ [ 120
-control
-first function
-second function
-comparison
-decision based on
 period variable ] →160→ [ 130 ] →140→

# FIG 1B

Wait$_{Rx}$ over
and next=T$_x$

194

190

Wait$_{Rx}$

Transmit over

182

180

Transmit

Transmitting
period 162

Wait$_{Rx}$ over
and next=R$_x$

196

176

$\Phi=\Phi_{threshold}$
and next=T$_x$

170

Listen

Receiving
period 164

174

$\Phi=\Phi_{threshold}$
and next=R$_x$

# FIG 1C

182

t

190
Wait$_{Rx}$
(Twait$_{Rx}$)

180
Transmit
(T$_{Transmit}$)

192

194

176

196

174

fire

172

170
Listen
(T$_{listen}$)

EP 1 852 998 B1

## FIG 2A

## FIG 2B

## FIG 2C

## FIG 2D

FIG 2E

FIG 2F

FIG 2G

FIG 3A

# FIG 3B

Transmitting
Period
162

wait$_{Rx}$ over
and *next* = `Tx´
—194

190

transmit
over

WAIT$_{Rx}$

182

TRANSMIT

180

wait
over

312

310

WAIT$_{Tx}$

196

wait$_{Rx}$ over
and *next* = `Rx´

Receiving
Period
164

REFR

320

refr over

322

174

LISTEN

170

176

$\phi = \phi_{threshold}$
and *next* = `Tx´

$\phi = \phi_{threshold}$
and *next* = `Rx´

## FIG 4A

## FIG 4B

## FIG 5A

## FIG 5B

## FIG 6

`Tx´  `Rx´      ...      `Tx´  `Rx´ `Rx´ `Tx´  `Rx´ `Rx´

1          2              $N_{stab}-1$      $N_{stab}$

610

local synchrony declared

## FIG 7A

# FIG 7B

# FIG 8

802.11 Frame

810  820  830  850

840

**Preamble included in every frame**

$8+8=16\mu S$

$10\times0.8=8\mu S$     $2\times0.8+2\times3.2=8\mu S$

$0.8+3.2=4.0\mu S$    $0.8+3.2=4.0\mu S$    $0.8+3.2=4.0\mu S$

$t_1\ t_2\ t_3\ t_4\ t_5\ t_6\ t_7\ t_8\ t_9\ t_{10}$    G12 | $T_1$ | $T_2$    GI | Signal    GI | Data 1    GI | Data2

Signal Detect   Coarce Freq.   Channel and   Rate   Data
AGC,Diversity   Offset Estimation   Fine Frequency   Length
Selection   Timing Synchronize   Offset Estimation   Service+Data

---

**Transmitting Period**

TRANSMIT   WAIT$_{Rx}$

$T_{Tx}$    $T_{dec}$

0     T    t

**Receiving Period**

RRFR   LISTEN

$T_{refr}$    $T_{Rx}$

0     T    t

FIG 9

FIG 10

EP 1 852 998 B1

## FIG 11A

## FIG 11B

## FIG 12A

Phase $\Phi(t)$

$\Phi_{threshold}$

fire    fire

0    T    2T    t

phase function period T

## FIG 12B

Listen    fire

$t, \Phi(t)$

## FIG 13A

## FIG 13D

FIG 13B

FIG 13C

## FIG 14A

refractory period over

$\phi = \phi_{threshold}$    wait over    transmit over

LISTEN → WAIT → TRANSMIT → REFR

## FIG 14B

fire    fire

$\phi(t)$    listen    wait    Tx    refr    listen

$\phi_{threshold}$

decode

T    T

0    t

1410

# FIG 14C

Tx → Channel h(t) → Rx

Transmitted signal x(t):

Received signal:
$y(t)=h(t)*x(t+T_o)$

Matched filter output:
$\Lambda(t)=x(-t)*y(t)$

Tx | REFR | LISTEN

$0$    $T_{Tx}$    $T_{Tx}+T_{refr}$    $T$    $t$

$0$    $T_0$    $T_0+T_{Tx}$    $t$

$T_{dec}$

total delay   $T_{tot}$

EP 1 852 998 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 05015250 A

**Non-patent literature cited in the description**

- **C. PREHOFER ; C. BETTSTETTER.** Self-organization in communication networks: Principles and design paradigms. *IEEE Communications Magazine,* July 2005, vol. 43, 78-85
- **R. MIROLLO ; S. STROGATZ.** Synchronization of pulse-coupled biological oscillators. *SIAM j. APPL. MATH,* December 1990, vol. 50, 1645-1662
- **Y.-W. HONG ; B. SIRKECI ; A. SCAGLIONE.** Swarming activities to distribute information in large sensor networks. *Proc. MILCOM Conference,* October 2003, 682-687
- **D. SARWATE ; M. PURSLEY.** Crosscorrelation properties of pseudorandom and related sequences. *Proc. IEEE,* May 1980, vol. 68, 593-619